# EUROPÄISCHE PATENTSCHRIFT

(11) **EP 3 885 522 B1**
(45) Veröffentlichungstag und Bekanntmachung des Hinweises auf die Patenterteilung: **26.11.2025**
(21) Anmeldenummer: 21161838.4
(22) Anmeldetag: 10.03.2021
(51) Int. Cl.: E06B 3/22, E06B 3/30, B29C 48/44, B29C 48/12, B29C 48/16, B29K 27/06, B29K 105/16, B29C 48/11, B29C 48/00

(54) **EXTRUSIONSPROFIL FÜR EIN TÜR- UND/ODER FENSTERTEIL SOWIE HERSTELLUNGSVERFAHREN**
EXTRUSION PROFILE FOR A DOOR AND / OR WINDOW PART AND METHOD OF MANUFACTURING THE SAME
PROFIL D'EXTRUSION POUR UNE PARTIE DE PORTE ET/OU DE FENÊTRE, AINSI QUE PROCÉDÉ DE FABRICATION

(30) Priorität: 27.03.2020 DE 102020108569
(43) Veröffentlichungstag der Anmeldung: 29.09.2021
(73) Patentinhaber: Salamander Industrie-Produkte GmbH, 86842 Türkheim (DE)
(72) Erfinder: Schmiedeknecht, Till, 80992 München (DE)
(74) Vertreter: Schmid, Nils T.F.

(56) Entgegenhaltungen:
- CN-B- 103 498 625
- DE-A1- 10 149 142
- DE-A1- 102012 016 512
- US-A1- 2014 350 154
- ANONYMOUS: "Lichtechtheit - Wikipedia", 26 October 2019 (2019-10-26), XP055834173, Retrieved from the Internet <URL:https://web.archive.org/web/20191026174312/https://de.wikipedia.org/wiki/Lichtechtheit> [retrieved on 20210823]

## Beschreibung

Die vorliegende Erfindung betrifft ein Extrusionsprofil, wie Koextrusionsprofil, für ein Fenster- und/oder Türteil, insbesondere ein Fenster- und/oder Türrahmenteil oder ein Fenster- und/oder Türflügelteil, sowie ein Verfahren zum Herstellen eines derartigen Profils.

Bislang werden Kunststoff-Extrusionsprofile für Tür- und/oder Fensterrahmen in der Regel vollständig aus Kunststoff-Rohmaterial hergestellt, vor allem wenn diese mittels Monoextrusion hergestellt werden. Bei Kunststoff-Koextrusionsprofilen wird bereits Kunststoff-Recyclingmaterial, insbesondere aus Umweltgründen, für nach außen nicht sichtbare Profilstege und -flächen eingesetzt. Als Kunststoff-Recyclingmaterial werden im Sinne der vorliegenden Erfindung unter anderem alte, bereits verbaute Kunststoffrahmen, die nach dem Einsatz wiederverwertet werden, und Kunststoff-Ausschussmaterial, welches beispielsweise im Rahmen des Verarbeitungsprozesses anfällt, verstanden. Zum einen wird aber bislang das Kunststoff-Recyclingmaterial aus Optikgründen nicht für sichtbare Außen- oder Innenflächen der Profile verwendet. Zum anderen wurde herausgefunden, dass das Kunststoff-Recyclingmaterial den Nachteil aufweist, dass es nicht so langlebig ist wie Kunststoff-Rohmaterial, insbesondere nicht so widerstandsfähig gegenüber äußeren Einflüssen, vor allem gegenüber UV-Strahlung. Extrusionsprofile sind z.B. bekannt aus CN103498625B und US2014/350154A1.

Es ist Aufgabe der vorliegenden Erfindung, die Nachteile aus dem bekannten Stand der Technik zu überwinden, insbesondere ein Extrusionsprofil bereitzustellen, bei dem Kunststoff-Recyclingmaterial für nach außen sichtbare Profilflächen eingesetzt wird, dessen Widerstandsfähigkeit gegenüber äußeren Einflüssen, wie direkter oder indirekter Lichteinwirkung, gleichzeitig aber nicht beeinträchtigt ist, insbesondere verbessert ist.

Diese Aufgabe wird durch die Gegenstände der unabhängigen Ansprüche gelöst.

Die vorstehende Aufgabe wird in einem ersten Aspekt nach Anspruch 1 gelöst, indem ein Extrusionsprofil, insbesondere ein Koextrusionsprofil**,** für ein Fenster- und/oder Türteil, insbesondere ein Fenster- und/oder Türrahmenteil oder ein Fenster- und/oder Türflügelteil, bereitgestellt wird, wobei wenigstens eine, eine Außenseite des Extrusionsprofils bildende Profiloberfläche aus zumindest Kunststoff-Recyclingmaterial hergestellt ist und mit mindestens einer Pigmentierung versehen ist, welche mindestens ein lichtechtes Pigment umfasst. Das Extrusionsprofil kann beispielsweise wenigstens abschnittsweise ein Fenster- und/oder Türteil bilden, wie beispielsweise einen Holm, wie einen Vertikalholm oder einen Horizontalholm, entweder eines feststehenden Fenster- und/oder Türrahmenteils oder eines bewegbaren, insbesondere verschiebbaren und/oder verschwenkbaren Fensterflügel- und/oder Türrahmenteils. Das Extrusionsprofil kann ein zunächst durch Extrusion hergestelltes Extrusionshalbzeug umfassen, das entlang der Extrusionsrichtung einen im Wesentlichen identischen Querschnitt sowie eine im Wesentlichen identische Außenabmessung besitzt.

Die Herstellung des erfindungsgemäßen Extrusionsprofils erfolgt durch ein Koextrusionsverfahren nach Anspruch 14. Hierdurch verringern sich die Kosten zur Herstellung eines erfindungsgemäßen Extrusionsprofils. Auf die einzelnen Schritte des

Herstellungsverfahrens wird später im Detail eingegangen. Im Sinne dieser Erfindung soll der Begriff "Monooextrusionsprofil" als ein durch Monoextrusion hergestelltes Profil verstanden. Der Begriff "Koextrusionsprofil" soll als ein durch Koextrusion hergestelltes Profil verstanden werden. Koextrusion bezeichnet das Zusammenführen von zwei artgleichen oder unterschiedlichen Kunststoffschmelzen vor dem Verlassen des Extrusionswerkzeuges (Düse), wobei die beiden Kunststoffschmelzen von zwei separaten Extrusionsanlagen erzeugt und im Extrusionswerkzeug (Düse) zu einem Werkstück zusammengeführt werden. Erfindungsgemäß werden die beiden Kunststoffschmelzen vorliegend in einem Koextrusionsprofil zusammengeführt.

Generell kann die Zugabe einer Pigmentierung die Festigkeit des Profils reduzieren.

Daher erfolgt erfindungsgemäß die Herstellung des Extrusionsprofils über ein Koextrusionsverfahren, da mittels eines Koextrusionsverfahrens auch bei Verwendung einer zusätzlichen Pigmentierung die Eckfestigkeit des Extrusionsprofils ausreichend gewährleistet werden kann. Durch das Koextrusionsverfahren wird die Anbringung einer dünnen Schicht der mindestens einen Pigmentierung ermöglicht. Es ist von großem Vorteil für diese Erfindung, dass durch die Anbringung einer dünnen Schicht der mindestens einen Pigmentierung, die Zugabe der mindestens einen Pigmentierung keinen merkenswerten festigkeitsreduzierenden Einfluss auf das Profil hat, da die Zugabe auf einzig eine sehr dünne Schicht reduziert werden kann. Daher weisen die erfindungsgemäß hergestellten Profile eine ausreichende Festigkeit sowohl im Schweißbereich, als auch eine ausreichende Festigkeit gegen Stoß und Bruch, auf.

Der Begriff "mindestens ein" soll im Sinne dieser Erfindung als zumindest ein einziger Stoff oder ein einziges Molekül, oder 2, 3, 4, 5, 6, 7, 8, 9, 10, 11, 12, 13, 14, 15, 16, 17, 18, 19, 20, oder jede beliebige Anzahl an Stoffen oder Molekülen verstanden werden. So soll beispielsweise der Begriff "mindestens eine Pigmentierung" im Sinne dieser Erfindung als zumindest eine Pigmentierung, oder 2, 3, 4, 5, 6, 7, 8, 9, 10, 11, 12, 13, 14, 15, 16, 17, 18, 19, 20, oder jede beliebige Anzahl an Pigmentierungen verstanden werden. Weiterhin soll beispielsweise der Begriff "mindestens ein lichtechtes Pigment" im Sinne dieser Erfindung als zumindest ein lichtechtes Pigment, oder 2, 3, 4, 5, 6, 7, 8, 9, 10, 11, 12, 13, 14, 15, 16, 17, 18, 19, 20, oder jede beliebige Anzahl an lichtechten Pigmenten verstanden werden. Darüber hinaus umfasst der Begriff "mindestens ein" im Sinne dieser Erfindung eine beliebig große Anzahl an Pigmentierungen und/oder lichtechten Pigmenten, die vorzugsweise innerhalb einer Schicht oder auf einer Fläche gleichmäßig verteilt sind. Im Sinne dieser Erfindung soll der Begriff "mindestens ein" jedoch auch eine beliebig große Anzahl an Pigmentierungen und/oder lichtechten Pigmenten umfassen, die innerhalb einer Schicht oder auf einer Fläche ungleichmäßig verteilt sind.

In einer beispielhaften Weiterbildung des erfindungsgemäßen Extrusionprofils ist das Kunststoff-Recyclingmaterial ein Gemisch, welches ein Alt-Fenster-Granulat umfasst, wobei das Alt-Fenster-Granulat einen Masseanteil zwischen 70 Gew.-% und 100 Gew.-% des Gemisches, insbesondere zwischen 80 Gew.-% und 98 Gew.-% des Gemisches, zwischen 90 Gew.-% und 97 Gew.-% des Gemisches oder etwa 95 Gew.-% des Gemisches, aufweist.

"Alt-Fenster-Granulat" im Sinne dieser Erfindung bezeichnet ein Gemisch, welches aus alten, zuvor bereits verbauten Kunststoffrahmen besteht, die nach dem Einsatz erneut verwertet werden, und/oder aus Kunststoffmaterial besteht, welches im Rahmen des Verarbeitungsprozesses beispielsweise beim Fensterhersteller oder beim Ausbau der alten Fenster anfällt. Im Sinne dieser Erfindung können die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, bei der Verarbeitung zum Alt-Fenster-Granulat miteinander vermischt werden. Die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, können auch separat vorliegen.

Vorzugsweise wird im Sinne dieser Erfindung ein Kunststoff-Recyclingmaterial für ein erfindungsgemäßes Extrusionsprofil verwendet, da dieses für die Umwelt vorteilhaft ist und es sich hierbei um ein CO2-neutrales Produkt handelt. Da das Kunststoff-Recyclingmaterial im erfindungsgemäßen Extrusionsprofil auch für nach außen sichtbare Profilflächen eingesetzt wird, ist die Umweltverträglichkeit der erfindungsgemäßen Extrusionsprofile nach außen hin erkennbar.

In einer weiteren beispielhaften Ausführung der vorliegenden Erfindung ist das Alt-Fenster-Granulat ein Material, welches durch ein Verfahren umfassend folgender Schritte hergestellt wurde:
i) Zerkleinern von Alt-Fenster-Material, insbesondere wobei das Zerkleinern das Mahlen oder Schreddern von Alt-Fenster-Material umfasst;
ii) Separieren des zerkleinerten Alt-Fenster-Materials;
iii) Sortieren des separierten und zerkleinerten Alt-Fenster-Materials in verschiedene Farbtöne;
iv) Optional, pigmentieren des sortierten, separierten und zerkleinerten Alt-Fenster-Materials;
v) Reinigen des pigmentieren, sortierten, separierten und zerkleinerten Alt-Fenster-Materials, wobei das Reinigen vorzugsweise durch Schmelzfiltration erfolgt, und
vi) Granulieren des gereinigten, pigmentieren, sortierten, separierten und zerkleinerten Alt-Fenster-Materials.

In Schritt ii) des Verfahrens werden zum Separieren vorzugsweise physikalische Trennverfahren oder optisch-physikalische Trennverfahren, die dem Fachmann geläufig sind, eingesetzt, um verschiedene Bestandteile, beispielsweise verschiedene Metalle, zu separieren. In einer bevorzugten Ausführungsform wird beispielsweise Eisen von Nicht-Eisen-Bestandteilen separiert. In einer weiteren bevorzugten Ausführungsform werden keramische Bestandteile von Kunststoffen separiert.

In Schritt iii) des Verfahrens wird das separierte und zerkleinerte Alt-Fenster-Material vorzugsweise in möglichst reine Farbtöne sortiert. In einer bevorzugten Ausführungsform wird das separierte und zerkleinerte Alt-Fenster-Material in Weißtöne, Brauntöne und Bunttöne sortiert. Die Sortierung in Schritt iii) des Verfahrens erfolgt vorzugsweise durch optische Farbsortierungsmethoden, die dem Fachmann geläufig sind.

Das durch das Verfahren erzeugte Alt-Fenster-Granulat wird erfindungsgemäß weiterverarbeitet, um mit der mindestens einen Pigmentierung versehen zu werden. Die Zugabe von Zusätzen, wie beispielsweise der mindestens einen Pigmentierung, in der Profilextrusion erfolgt vorzugsweise über mindestens eine Dosiereinrichtung in der Materialzuführung, beispielsweise in einem Trichter, des Extruders oder durch Beimischen der mindestens einen Pigmentierung in einem vorgelagerten Mischbereich.

Eine Pigmentierung bei der Alt-Fenster-Granulat-Herstellung vor der Schmelzfiltration kann problematisch sein, da dadurch die Korngröße des Pigments durch die Maschenweite des Schmelzfilters begrenzt wird. Daher erfolgt in einer besonders bevorzugten Ausführungsform die Pigmentierung bei der Alt-Fenster-Granulat-Herstellung erst nach der Schmelzfiltration.

In einer weiteren beispielhaften Ausführung des erfindungsgemäßen Extrusionsprofils umfasst das Gemisch Abfallprodukte oder Profilabschnitte, die bei der Extrusion eines Profils, beispielsweise eines Profils für ein Tür- und/oder ein Fensterrahmenteil, insbesondere einen Tür- und/oder einen Fensterrahmen, anfallen. Die Abfallprodukte oder Profilabschnitte werden erfindungsgemäß ähnlich dem Alt-Fenster-Granulat, wie oben beschrieben, aufbereitet.

In einer weiteren beispielhaften Weiterbildung der vorliegenden Erfindung ist das Kunststoff-Recyclingmaterial ein Gemisch, welches ein Alt-Fenster-Granulat und mindestens einen Zusatzstoff umfasst. Vorzugsweise ist der mindestens eine Zusatzstoff Calciumcarbonat, Titan(IV)-oxid, ein Modifizierungsmittel, ein Stabilisator, eine Metallseife, ein Gleitmittel, ein Stearat, eine Fettsäure und/oder ein Pigment. Darüber hinaus kann der mindestens eine Zusatzstoff ein Flammhemmer, ein UV-Absorber, ein Treibmittel, ein Haftvermittler, Mica, Kaolin, Schiefermehl, Schiefergrieß, Blähschiefer, ein Antistatika und/oder ein Fungizid sein.

Im Sinne dieser Erfindung kann jedes handelsübliche Modifizierungsmittel verwendet werden. Vorzugsweise wird das Modifizierungsmittel ausgewählt aus chlorierten Polyolefinen, wie chloriertem Polyethylen (CPE), Polymeren vom Acrylattyp, wie Homo- und Copolymere von Acrylsäurealkylestern, Acrylat, Ethylen-Propylen-Kautschuke, Schlagzähmodifizierungsmittel vom Butadientyp, wie AcrylnitrilButadien-Styrol (ABS) und/oder Methacrylsäuremethylester-Butadien-Styrol (MBS), und Copolymeren des Ethylens mit Vinylacetat (EVA).

Im Sinne dieser Erfindung kann jeder handelsübliche Stabilisator verwendet werden. Vorzugsweise wird der Stabilisator ausgewählt aus anorganischen Stabilisatoren auf Basis von Cd, Pb, Mg, Sn, Zn, Ca oder Ba, beispielsweise einer Metallseife, wie einer Bariumcadmiumseife, einer Calcium-Zinkseife oder einer Bleiseife, einem Bleisalz, einer Alkylzinnmerkaptoverbindung, einem Alkylzinncarboxylat, oder aus organischen Stabilisatoren wie einem epoxidierten Öl oder Ester, einem Diphenylthioharnstoff, Phenlindol, einem Phenol, einem Bis-Phenol, einem arylischen Phosphit, einem alkylischen Phosphit oder einem arylisch-alkylischen Phosphit.

Vorzugsweise wird eine neutrale oder eine basische Metallseife verwendet, wobei die Metallseife besonders bevorzugt ausgewählt wird aus einer Metallseife auf Basis von Cd, Pb, Mg, Sn, Zn, Ca und Ba, beispielsweise einer Bariumcadmiumseife, einer Calcium-Zinkseife und einer Bleiseife.

Im Sinne dieser Erfindung kann jedes Gleitmittel verwendet werden, insbesondere ein Gleitmittel wie Glycerin, einem Fettalkohol mit einer Kettenlänge von C12 bis C40, einem Monoester, einem Diester oder einem Triester natürlicher oder oxidierter Carbonsäuren mit einer Kettenlänge von C12 bis C40, einer Fettsäure mit einer Kettenlänge von C12 bis C40, einer substituierten Fettsäure, einer oxidierten Fettsäure, einem Paraffinöl, einem festen Paraffin, Polyethylen, einem oxidierten Polyethylen, einem Fettsäureamid und einem Silikonöl.

Als Stearate kommen beispielsweise Stearate der Metalle Cd, Pb, Mg, Sn, Zn, Ca oder Ba, Phtalsäureester langkettiger Alkohole oder Wachsester, wie beispielsweise C10 bis C40-Alkohole verestert mit C12 bis C36-Säuren, oder dergleichen in Frage.

Im Sinne dieser Erfindung kann jede Fettsäure, insbesondere Fettsäuren mit Kettenlängen von C12 bis C40, verwendet werden.

In einer beispielhaften Weiterbildung der vorliegenden Erfindung umfasst der Haftvermittler in einem Lösungsmittel wie VOC, Isobutanol, Xylole oder Ethylbenzol gelöste Ein- oder Zweikomponenten-Harze, insbesondere Epoxidharze, Alkydharze, Acrylharze und/oder Polyesterharze.

Vorzugsweise wird ein Pigment als Zusatzstoff verwendet, welches dem Gemisch eine gewünschte Farbgebung verleiht.

In einer bevorzugten Ausführungsform umfasst das Gemisch Alt-Fenster-Granulat und Mahlgut. Besonders bevorzugt ist das Mahlgut ein nachindustrielles Material.

In einer weiteren bevorzugten Ausführungsform wird ein Gemisch verwendet, wobei das Gemisch Alt-Fenster-Granulat und Mahlgut umfasst, und wobei das Verhältnis Alt-Fenster-Granulat zu Mahlgut etwa 30-70% ist, oder etwa 40-60%, oder etwa 50-50%, oder etwa 60-40%, oder etwa 70-30%, oder etwa 80-20% ist.

In einer weiteren bevorzugten Ausführungsform ist das Gemisch ein "Dryblend"-Gemisch. Der Begriff "Dryblend" soll im Sinne dieser Anmeldung als ein Gemisch umfassend einem Kunststoff-Recyclingmaterial und mindestens einem Zusatzstoff verstanden werden. Besonders bevorzugt besteht das Dryblend-Gemisch aus mindestens einem Kunststoff-Recyclingmaterial, insbesondere Polyvinylchlorid-Kunststoff, Calciumcarbonat, Titan(IV)-oxid, mindestens einem Modifizierungsmittel, mindestens einem Stabilisator, mindestens einer Metallseife, mindestens einem Gleitmittel, mindestens einem Stearat, und/oder mindestens einer Fettsäure. Das Dryblend-Gemisch kann in einer weiter bevorzugten Ausführungsform mindestens ein Pigment enthalten. Durch die Zugabe mindestens eines Pigments wird eine gewünschte Farbgebung des Gemisches ermöglicht.

Im Sinne dieser Erfindung wird der Begriff "etwa" verwendet, um eine gewisse Mengentoleranz anzudeuten. "Etwa" bezeichnet erfindungsgemäß ± 10.0%, oder ± 5.0%, oder ± 1.0%, oder ± 0.5%, oder ± 0.1%.

Nach der Erfindung ist der Kunststoff des Kunststoff-Recyclingmaterials ein Polyvinylchlorid-Kunststoff. Vorzugsweise ist das Kunststoff-Recyclingmaterial ein Recyclingmaterial aus Polyvinylchlorid-Kunststoff.

Erfindungsgemäß kann die Pigmentierung jedes Pigment, insbesondere jedes lichtechte Pigment, umfassen. In einer bevorzugten Ausführungsform umfasst die Pigmentierung mindestens ein organisches und/oder mindestens ein anorganisches Pigment.

Der Begriff "mindestens ein organisches Pigment" soll im Sinne dieser Erfindung als zumindest ein organisches Pigment, oder 2, 3, 4, 5, 6, 7, 8, 9, 10, 11, 12, 13, 14, 15, 16, 17, 18, 19, 20, oder jede beliebige Anzahl an organischen Pigmenten verstanden werden. Im Sinne dieser Erfindung soll der Begriff "mindestens ein anorganisches Pigment" als zumindest ein anorganisches Pigment, oder 2, 3, 4, 5, 6, 7, 8, 9, 10, 11, 12, 13, 14, 15, 16, 17, 18, 19, 20, oder jede beliebige Anzahl an anorganischen Pigmenten verstanden werden. Darüber hinaus umfasst der Begriff "mindestens ein" im Sinne dieser Erfindung eine beliebig große Anzahl an organischen und/oder anorganischen Pigmenten, die vorzugsweise innerhalb einer Schicht oder auf einer Fläche gleichmäßig verteilt sind. Im Sinne dieser Erfindung soll der Begriff "mindestens ein" jedoch auch eine beliebig große Anzahl an organischen und/oder anorganischen Pigmenten umfassen, die innerhalb einer Schicht oder auf einer Fläche ungleichmäßig verteilt sind.

Nach der Erfindung wird ein Gemisch verwendet, wobei das Gemisch Kunststoff-Recyclingmaterial und mindestens eine Pigmentierung umfasst. Vorzugsweise ist das Verhältnis Kunststoff-Recyclingmaterial zu der mindestens einen Pigmentierung etwa 20-80%, oder etwa 30-70%, oder etwa 40-60%, oder etwa 50%-50%, oder etwa 60-40%, oder etwa 70-30%, oder etwa 80-20%. Besonders bevorzugt umfasst das Gemisch 15-50% Kunststoff-Recyclingmaterial und 25-50% der mindestens einen Pigmentierung. Am meisten bevorzugt umfasst das Gemisch 25-35% Kunststoff-Recyclingmaterial und 30-35% der mindestens einen Pigmentierung. Dieses Mengenverhältnis zwischen Kunststoff-Recyclingmaterial und der mindestens einen Pigmentierung bezogen auf die außenseitige, sichtbare Profiloberfläche gewährleistet eine zuverlässige Extrusion und eine ausreichende Steifigkeit des Extrusionsprofils.

In einer besonders bevorzugten Ausführungsform weist das mindestens eine organische Pigment einen Masseanteil zwischen 0.01 Gew.-% und 10.00 Gew.-% des Gemisches, insbesondere zwischen 0.10 Gew.-% und 5.00 Gew.-% des Gemisches, zwischen 0.50 Gew.-% und 1.00 Gew.-% des Gemisches oder etwa 0.80 Gew.-% des Gemisches, auf. Im Sinne dieser Erfindung umfasst der Begriff "mindestens ein organisches Pigment" auch eine Kombination an unterschiedlichen organischen Pigmenten. Der Begriff "mindestens ein organisches Pigment" im Sinne dieser Erfindung kann also neben einem einzelnen organischen Pigment auch 2, 3, 4, 5, 6, 7, 8, 9, 10, 11, 12, 13, 14, 15, 16, 17, 18, 19, 20, oder jede beliebige Anzahl an verschiedenen organischen Pigmenten umfassen.

In einer weiteren bevorzugten Ausführungsform wird das mindestens eine organische Pigment ausgewählt aus einem Azopigment, einem Phthalocyaninpigment, einem Quinacridonpigment, einem Lackpigment, Kohleschwarz, und einer Kombination hiervon.

In einer bevorzugten Ausführungsform weist das mindestens eine anorganische Pigment einen Masseanteil zwischen 10 Gew.-% und 50 Gew.-% des Gemisches, insbesondere zwischen 20 Gew.-% und 40 Gew.-% des Gemisches, zwischen 25 Gew.-% und 35 Gew.-% des Gemisches oder etwa 32 Gew.-% des Gemisches, auf.

In einer beispielhaften Weiterbildung wird das mindestens eine anorganische Pigment ausgewählt aus einem Eisenoxid, einem Eisenhydroxid, einem Zinkferrit, einem Zinkoxid, einem Magnesiumferrit, einem Manganferrit, einem Cadmiumsulfid, Chrom(III)-oxid, Chrom(III)-oxid-Hydrat, Chromoxidgrün (PG17), Chromoxidhydratgrün (PG18), Kobaltozinkat (CoZnO₂), Malachit (Cu₂CO₃(OH)₂), Kupfer(II)-arsenit (CuHAsO₃), Arsen(III)-sulfid (As₂S₃), Vanadiumgelb (PY184), Bismutvanadat (BiVO₄), Cadmiumgelb (PY37), und einer Kombination hiervon.

In einer besonders bevorzugten Ausführungsform umfasst das Gemisch zusätzlich mindestens einen Stoff, welcher ausgewählt wird aus der Gruppe bestehend aus:
(i) einem Mineralfüllstoff, wie beispielsweise Calciumcarbonat, Talk, Glimmer, Wollastonit, Silica, Kaolin, Magnesiumsilikat, Aluminiummagnesiumsilikat, Kaliumaluminiumsilikat, Mica, MicaCelia, Graphit, Schiefer, Glasfaser, oder Dolomit,
(ii) einem Mineralpigment, wie beispielsweise Titan(IV)-oxid (TiO2), Zirconium(II)-oxid (ZnO), Cer(III)-oxid (Ce2O3), Cadmiumsulfid (CdS), Calciumascorbat (CaAs), Zirconium(IV)-oxid (ZrO2), Eisen(I)oxid (Fe2O), Eisen(II)oxid (FeO), Eisen(III)oxid (Fe2O3), oder Siliciumdioxid (SiO2),
(iii) einer Polyesterifizierungspolymerverbindung,
(iv) einem Copolymer, wie beispielsweise einem Copolymer des Ethylens mit Vinylacetat (EVA),
(v) einem Gleitmittel, wie beispielsweise Glycerin, einem Fettalkohol, einer Fettsäure, einem Paraffinöl, einem Paraffin, Polyethylen, einem Fettsäureamid oder einem Silikonöl,
(vi) einem Polyvinylchlorid, wie beispielsweise K65-Polyvinylchlorid, K66-Polyvinylchlorid, K67-Polyvinylchlorid, K68-Polyvinylchlorid oder K69-Polyvinylchlorid,
(vii) einem Ester, wie beispielsweise Phthalsäureester (Phtalat), Diallylphthalat, Di-2-ethylhexylphthalat, Diisooctylphthalat, oder Tetrabromdioctylphthalat; und
(viii) einem Modifizierungsmittel, einem Stabilisator, einer Metallseife, einem Stearat, einer Fettsäure, einem Pigment, einem Flammhemmer, einem UV-Absorber, einem Treibmittel, oder einem Haftvermittler.

Im Sinne dieser Erfindung kann jeder handelsübliche Mineralfüllstoff verwendet werden. Vorzugsweise wird als Mineralfüllstoff Calciumcarbonat, Talk, Glimmer, Wollastonit, Silica, Kaolin, Magnesiumsilikat, Aluminiummagnesiumsilikat, Kaliumaluminiumsilikat, Mica, MicaCelia, Graphit, Schiefer, wie beispielsweise Schiefermehl, Schiefergrieß, oder Blähschiefer, Glasfaser oder Dolomit verwendet.

Im Sinne dieser Erfindung kann jedes handelsübliche Mineralpigment verwendet werden. Vorzugsweise wird das Mineralpigment ausgewählt aus Titan(IV)-oxid (TiO2), Zirconium(II)-oxid (ZnO), Cer(III)-oxid (Ce2O3), Cadmiumsulfid (CdS), Calciumascorbat (CaAs), Zirconium(IV)-oxid (ZrO2), Eisen(I)oxid (Fe2O), Eisen(II)oxid (FeO), Eisen(III)oxid (Fe2O3), und Siliciumdioxid (SiO2).

Im Sinne dieser Erfindung kann jede handelsübliche Polyesterifizierungspolymerverbindung verwendet werden.

Im Sinne dieser Erfindung kann jedes handelsübliche Copolymer verwendet werden. Vorzugsweise wird ein Copolymer des Ethylens mit Vinylacetat (EVA) verwendet.

Im Sinne dieser Erfindung kann jedes Gleitmittel verwendet werden, insbesondere ein Gleitmittel wie Glycerin, einem Fettalkohol mit einer Kettenlänge von C12 bis C40, einem Monoester, einem Diester oder einem Triester natürlicher oder oxidierter Carbonsäuren mit einer Kettenlänge von C12 bis C40, einer Fettsäure mit einer Kettenlänge von C12 bis C40, einer substituierten Fettsäure, einer oxidierten Fettsäure, einem Paraffinöl, einem festen Paraffin, Polyethylen, einem oxidierten Polyethylen, einem Fettsäureamid oder einem Silikonöl.

Im Sinne dieser Erfindung kann jedes handelsübliche Polyvinylchlorid verwendet werden. Vorzugsweise wird das Polyvinylchlorid als Trägermaterial verwendet, wobei das Polyvinylchlorid besonders bevorzugt K65-Polyvinylchlorid, K66-Polyvinylchlorid, K67-Polyvinylchlorid, K68-Polyvinylchlorid oder K69-Polyvinylchlorid ist.

Im Sinne dieser Erfindung kann jeder Ester verwendet werden. Vorzugsweise wird der Ester ausgewählt aus Phthalsäureester (Phtalat), Diallylphthalat, Di-2-ethylhexylphthalat, Diisooctylphthalat und Tetrabromdioctylphthalat. Vorzugsweise ist das Phthalt frei von Weichmachern.

In einer besonders bevorzugten Ausführungsform umfasst das Gemisch ein organisches Pigment, ein anorganisches Pigment, und ein Mineralpigment, vorzugsweise Titan(IV)-oxid (TiO2), optional wobei das Gemisch zusätzlich einen Mineralfüllstoff, eine Polyesterifizierungspolymerverbindung, ein Polyvinylchlorid, und/oder ein Ester, vorzugsweise Phthalsäureester (Phtalat), umfasst.

In einer beispielhaften Weiterbildung weist das organische Pigment einen Masseanteil zwischen 0.5 Gew.-% und 1.5 Gew.-%, das anorganische Pigment einen Masseanteil zwischen 25.0 Gew.-% und 35.0 Gew.-%, das Mineralpigment, insbesondere Titan(IV)-oxid (TiO2), einen Masseanteil zwischen 20.0 Gew.-% und 30.0 Gew.-%, der Mineralfüllstoff einen Masseanteil zwischen 0.0 Gew.-% und 35.0 Gew.-% Gemisches, die Polyesterifizierungspolymerverbindung einen Masseanteil zwischen 0.0 Gew.-% und 45.0 Gew.-%, das Polyvinylchlorid einen Masseanteil zwischen 0.0 Gew.-% und 35.0 Gew.-%, und der Ester, vorzugsweise Phthalsäureester (Phtalat), einen Masseanteil zwischen 0.0 Gew.-% und 30.0 Gew.-% des Gemisches auf.

In einer weiteren bevorzugten Ausführungsform weist das organische Pigment einen Masseanteil von etwa 0.8 Gew.-%, das anorganische Pigment einen Masseanteil von etwa 32.0 Gew.-%, Titan(IV)-oxid (TiO2) einen Masseanteil von etwa 24.0 Gew.-%, der Mineralfüllstoff einen Masseanteil von etwa 10.2 Gew.-% und die Polyesterifizierungspolymerverbindung einen Masseanteil von etwa 33.0 Gew.-% des Gemisches auf. In dieser beispielhaften Ausführungsform ist das Gemisch hochkonzentriert.

In einer beispielhaften Weiterbildung weist das organische Pigment einen Masseanteil von etwa 0.8 Gew.-%, das anorganische Pigment einen Masseanteil von etwa 32.0 Gew.-%, Titan(IV)-oxid (TiO2) einen Masseanteil von etwa 24.0 Gew.-%, das Polyvinylchlorid einen Masseanteil von etwa 24.0 Gew.-%, der Ester, vorzugsweise Phthalsäureester (Phtalat), einen Masseanteil von etwa 19.0 Gew.-% und der Mineralfüllstoff einen Masseanteil etwa 0.2 Gew.-% des Gemisches auf. In dieser beispielhaften Ausführungsform ist das Gemisch mild-konzentriert.

Des Weiteren wurde herausgefunden, dass Kunststoff-Recyclingmaterial, welches beispielsweise Alt-Fenster-Granulat umfasst, den Nachteil aufweist, dass es nicht so langlebig ist wie Kunststoff-Rohmaterial, insbesondere nicht so widerstandsfähig gegenüber äußeren Einflüssen, vor allem gegenüber UV-Strahlung. Daher besteht grundsätzlich ein Interessenskonflikt zwischen einerseits dem Wunsch, ein Extrusionsprofil für ein Fenster- und/oder Türteil bereitzustellen, bei dem wenigstens eine, eine Außenseite des Extrusionsprofils bildende Profiloberfläche aus umweltverträglichem Kunststoff- Recyclingmaterial hergestellt ist, und andererseits der Bereitstellung eines Extrusionsprofil für ein Fenster- und/oder Türteil, welches langlebig und widerstandsfähig gegenüber äußeren Einflüssen ist, vor allem gegenüber UV-Strahlung. Durch die erfindungsgemäßen Maßnahmen, nämlich die Pigmentierung der wenigstens einen, eine Außenseite des Extrusionsprofils bildende Profiloberfläche, mit mindestens einem lichtechten Pigment, kann dieser Interessenskonflikt auf wirtschaftliche Weise zuverlässig gelöst werden.

Ein weiterer Vorteil besteht darin, dass die wenigstens eine Pigmentierung der wenigstens einen, eine Außenseite des Extrusionsprofils bildende Profiloberfläche, mit mindestens einem lichtechten Pigment die Reflexion einer Strahlung, insbesondere einer UV-Strahlung, im Extrusionsprofil für ein Fenster- und/oder Türteil, insbesondere ein Fenster- und/oder Türrahmenteil oder ein Fenster- und/oder Türflügelteil, erhöht. Daher erlaubt die Pigmentierung der wenigstens einen, eine Außenseite des Extrusionsprofils bildenden Profiloberfläche, mit mindestens einem lichtechten Pigment, die Bereitstellung eines Extrusionsprofils für ein Fenster- und/oder Türteil, bei dem wenigstens eine, eine Außenseite des Extrusionsprofils bildende Profiloberfläche aus Kunststoff-Recyclingmaterial hergestellt ist, welches umweltverträglicher und CO₂-neutraler, aber dennoch langlebig, lichtbeständig und widerstandsfähig gegenüber äußeren Einflüssen, vor allem gegenüber UV-Strahlung ist.

Im Sinne dieser Erfindung wird der Begriff "Lichtechtheit" als ein Maß für die Farbechtheit eines Materials, insbesondere eines Oberflächenmaterials, verwendet. Zur Bestimmung der Lichtechtheit wird analysiert, ob die Farben des Materials, insbesondere des Oberflächenmaterials, bei direkter oder indirekter Lichteinwirkung ausbleichen und/oder ihre Farbe ändern. Lichtechte Materialien, insbesondere Oberflächenmaterialien, verlieren auch bei direkter Sonneneinstrahlung nichts oder kaum etwas von ihrer Farbintensität. Besonders Sonnenlicht mit hohem UV-Lichtanteil hat jedoch auf viele Materialien, insbesondere Oberflächenmaterialien, eine zersetzende Wirkung, was zu sichtbaren Farbveränderungen führen kann. Derartige Farbveränderungen haben nicht nur ästhetische, sondern auch technische Nachteile.

Auf Extrusionsprofile, beispielsweise aus Kunststoff, für Fenster- und/oder Türteile, insbesondere Fenster- und/oder Türrahmenteile oder Fenster- und/oder Türflügelteile, wirken je nach Lichtart Ultraviolett (UV)-Strahlen und Infrarot (IR)-strahlen mit unterschiedlicher Intensität ein. Da derartige Extrusionsprofile dauerhaft den Witterungsbedingungen, insbesondere der UV-Strahlung, für lange Zeit ausgesetzt sind, können diese Strahlen im Laufe der Zeit Reaktionen im Kunststoffmaterial auslösen, die zu einer Versprödung und/oder einem Verblassen der Materialien, insbesondere Oberflächenmaterialien, führen können.

Die Lichtechtheit kann erfindungsgemäß durch jedes dem Fachmann geläufige Verfahren bestimmt werden. Beispielsweise kann die Lichtechtheit durch ein Belichtungsverfahren nach DIN 2015: A02 bestimmt werden, in dem die Farbtemperatur bei einer Gesamteinstrahlungsleistung von beispielsweise etwa 12 GJ/m² in einem Wellenlängenbereich von etwas 300 nm bis 800 nm gemessen werden kann. Auf die einzelnen Schritte der Verfahren zur Bestimmung der Lichtechtheit und Wetterechtheit wird später in den Beispielen im Detail eingegangen.

Es wurde herausgefunden, dass Kunststoff-Recyclingmaterial eine Lichtechtheit aufweist, welche eine gewünschte Witterungsbeständigkeit und Farbechtheit eines Extrusionsprofils für ein Fenster- und/oder Türteil, insbesondere ein Fenster- und/oder Türrahmenteil oder ein Fenster- und/oder Türflügelteil, nicht ausreichend gewährleisten kann. Darüber hinaus wurde herausgefunden, dass es über den erfindungsgemäßen Zusatz der mindestens einen Pigmentierung, welche mindestens ein lichtechtes Pigment umfasst, möglich ist, die Lichtechtheit der erfindungsgemäßen Extrusionsprofile aus Kunststoff-Recyclingmaterial beträchtlich zu verbessern und so langlebige und insbesondere gegenüber äußeren Einflüssen, vor allem gegenüber UV-Strahlung, widerstandsfähige Extrusionsprofile für ein Fenster- und/oder Türteil Kunststoff- Recyclingmaterial bereitzustellen.

In einer weiteren beispielhaften Ausführung der vorliegenden Erfindung ermöglicht die mindestens eine Pigmentierung, welche mindestens ein lichtechtes Pigment umfasst, der wenigstens einen, eine Außenseite des Extrusionsprofils bildenden Profiloberfläche, die Bereitstellung eines Extrusionsprofils für ein Fenster- und/oder Türteil, bei dem wenigstens eine, eine Außenseite des Extrusionsprofils bildende Profiloberfläche aus Kunststoff-Recyclingmaterial hergestellt ist, in welchem eine Lichtechtheit der wenigstens einen, eine Außenseite des Extrusionsprofils bildende Profiloberfläche aus zumindest Kunststoff-Recyclingmaterial, auf mindestens eine Lichtechtheitsnote 4, vorzugsweise 5, mehr bevorzugt 6, noch mehr bevorzugt 7 und am meisten bevorzugt die Lichtechtheitsnote 8 eines Blaumaßstabs, oder auf eine Lichtechtheitsnote 2, vorzugsweise 3, am meisten bevorzugt die Lichtechtheitsnote 4 eines Graumaßstabs erhöht ist. Die Lichtechtheitsnote nach dem Graumaßstab wird erfindungsgemäß bevorzugt nach einem DIN 2015-A02 Verfahren ermittelt.

In einer beispielhaften Weiterbildung des erfindungsgemäßen Profils ermöglicht die mindestens eine Pigmentierung, welche mindestens ein lichtechtes Pigment umfasst, der wenigstens einen, eine Außenseite des Extrusionsprofils bildenden Profiloberfläche, die Bereitstellung eines Extrusionsprofils für ein Fenster- und/oder Türteil, bei dem wenigstens eine, eine Außenseite des Extrusionsprofils bildende Profiloberfläche aus Kunststoff-Recyclingmaterial hergestellt ist, und wobei die wenigstens eine, eine Außenseite des Extrusionsprofils bildende Profiloberfläche mindestens eine Lichtechtheitsnote 4, vorzugsweise 5, mehr bevorzugt 6, noch mehr bevorzugt 7 und am meisten bevorzugt die Lichtechtheitsnote 8 eines Blaumaßstabs, oder eine Lichtechtheitsnote 2, vorzugsweise 3, am meisten bevorzugt eine Lichtechtheitsnote 4 eines Graumaßstabs aufweist. Die Lichtechtheitsnote nach dem Graumaßstab wird erfindungsgemäß bevorzugt nach einem DIN 2015-A02 Verfahren ermittelt.

In einer zusätzlichen Weiterbildung des erfindungsgemäßen Extrusionsprofils erhöht die mindestens eine Pigmentierung, welche mindestens ein lichtechtes Pigment umfasst, die Reflexion einer Strahlung, insbesondere einer UV-Strahlung, des Tür- und/oder Fensterrahmenteils, wobei die mindestens eine Pigmentierung, welche mindestens ein lichtechtes Pigment umfasst, die wenigstens eine, eine Außenseite des Extrusionsprofils bildende Profiloberfläche aus zumindest Kunststoff-Recyclingmaterial, vor einer Abnutzung durch die Strahlung, insbesondere die UV-Strahlung, bewahrt.

Gemäß einem weiteren Aspekt der vorliegenden Erfindung, der mit den vorhergehenden Aspekten und beispielhaften Ausführungen kombinierbar ist, wird die vorstehende Aufgabe in einem zweiten Aspekt gelöst, indem ein Verfahren zum Herstellen eines insbesondere nach einem der vorstehenden Ansprüche ausgebildeten Extrusionsprofils bereitgestellt wird, bei dem mittels Koextrusion, wenigstens eine, eine Außenseite des Extrusionsprofils bildende Profiloberfläche aus zumindest Kunststoff-Recyclingmaterial hergestellt ist und mit mindestens einer Pigmentierung versehen ist, welche mindestens ein lichtechtes Pigment umfasst.

Erfindungsgemäß erfolgt die Herstellung des Extrusionsprofils über ein Koextrusionsverfahren, da durch Koextrusion die Verwendung der mindestens einen Pigmentierung auf eine einzige Schicht der wenigstens einen, eine Außenseite des Extrusionsprofils bildende Profiloberfläche, begrenzt werden kann. Diese Schicht befindet sich vorzugsweise auf der Sichtfläche des Profils. Besonders bevorzugt wird eine Schicht der mindestens einen Pigmentierung auf der Sichtfläche des Extrusionsprofils aufgebracht, wobei eine geringere Menge der mindestens einen Pigmentierung benötigt wird. Hierdurch verringern sich die Kosten zur Herstellung eines erfindungsgemäßen Extrusionsprofils. Zudem erhöhen sich die Festigkeit des Profils im Schweißbereich, sowie die Festigkeit des Profils gegen Stoß und Bruch.

In einer weiteren bevorzugten Ausführungsform beinhaltet das Verfahren zum Herstellen eines Extrusionsprofils den Schritt der Dosierung der mindestens einen Pigmentierung, wobei die Dosierung der mindestens einen Pigmentierung durch Zugabe der mindestens einen Pigmentierung zum Kunststoff-Recyclingmaterial über eine Dosiereinrichtung, beispielsweise eine volumetrische und/oder eine gravimetrische Dosiereinrichtung, erfolgt.

In einer weiteren beispielhaften Ausführungsform erhöht die mindestens eine Pigmentierung, welche mindestens ein lichtechtes Pigment umfasst, eine Lichtechtheit der wenigstens einen, eine Außenseite des Extrusionsprofils bildende Profiloberfläche aus zumindest Kunststoff-Recyclingmaterial, auf mindestens eine Lichtechtheitsnote 4, vorzugsweise 5, mehr bevorzugt 6, noch mehr bevorzugt 7 und am meisten bevorzugt die Lichtechtheitsnote 8 eines Blaumaßstabs, oder auf eine Lichtechtheitsnote 2, vorzugsweise 3, am meisten bevorzugt die Lichtechtheitsnote 4 eines Graumaßstabs. Die Lichtechtheitsnote nach dem Graumaßstab wird erfindungsgemäß bevorzugt nach einem DIN 2015-A02 Verfahren ermittelt.

In einer beispielhaften Weiterbildung wird die Lichtechtheit der wenigstens einen, eine Außenseite des Extrusionsprofils bildende Profiloberfläche, durch ein Verfahren bestimmt wird, umfassend die folgende Schritte:
(i) Belichten eines Benotungsmusters und eines ersten Teils der Profiloberfläche, wobei ein zweiter Teil der Profiloberfläche abgedeckt wird,
(ii) Vergleichen des ersten Teils der Profiloberfläche mit dem zweiten Teil der Profiloberfläche und dem Benotungsmuster, und
(iii) Bestimmen einer Lichtechtheitsnote.

In einer bevorzugten Weiterbildung wird die Lichtechtheitsnote nach dem Graumaßstab nach einem DIN 2015-A02 Verfahren ermittelt.

Besonders bevorzugt ist eine beispielhafte Ausführungsform, wobei die Lichtechtheit der wenigstens einen, eine Außenseite des Extrusionsprofils bildende Profiloberfläche, durch ein Verfahren bestimmt wird, umfassend die folgende Schritte:
(i) Belichten eines Benotungsmusters, welches vier Stufen umfasst, und eines ersten Teils der Profiloberfläche, wobei ein zweiter Teil der Profiloberfläche abgedeckt wird,
(ii) Vergleichen des ersten Teils der Profiloberfläche mit dem zweiten Teil der Profiloberfläche und dem Benotungsmuster, welches vier Stufen umfasst, und
(iii) Bestimmen einer Lichtechtheitsnote, wobei die Lichtechtheitsnote vier Stufen umfasst, und wobei die Lichtechtheitsnote beispielsweise 1, 2, 3, oder 4 sein kann.

Der Begriff "Stufen" im Sinne dieser Erfindung bezeichnet jegliche Abstufungen, Unterteilugen oder Skalen, die zur Unterteilung eines Wertes verwendet werden können.

Die vorliegende Erfindung stellt auch einen Tür- und/oder Fensterrahmen sowie einen Tür- und/oder Fensterflügel bereit, der wenigstens einen Holm aufweist, der durch ein erfindungsgemäßes Verfahren hergestellt ist oder durch ein erfindungsgemäßes Profil gebildet ist.

Gemäß einem weiteren Aspekt der vorliegenden Erfindung, der mit den vorhergehenden Aspekten und beispielhaften Ausführungen kombinierbar ist, wird die vorstehende Aufgabe in einem weiteren Aspekt gelöst, indem die Verwendung von mindestens einer Pigmentierung, welche mindestens ein lichtechtes Pigment umfasst, zur Stabilisierung von Kunststoff-Recyclingmaterial gegen die Auswirkungen von Licht und/oder Wärme auf die Lichtechtheit, insbesondere gegen Farbtonverschiebungen und/oder lichtinduziertes Ausbleichen eines Kunststoff-Recyclingmaterials bereitgestellt wird.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen und Beispiele deutlich, in denen zeigen:
- Figur 1: eine bespielhafte Ausführung eines erfindungsgemäßen Koextrusionsprofils in der Schnittansicht;
- Figur 2: eine bespielhafte Ausführung eines erfindungsgemäßen Koextrusionsprofils in der Schnittansicht;
- Figur 3: eine bespielhafte Ausführung eines nicht erfindungsgemäßen Monoextrusionsprofils in der Schnittansicht;
- Figur 4: eine bespielhafte Ausführung eines nicht erfindungsgemäßen Monoextrusionsprofils in der Schnittansicht;
- Figur 5: eine schematische Darstellung eines Ausschnitts einer Herstellungsanlage für ein nicht erfindungsgemäßes Monoextrusionsprofil in der Seitenansicht;
- Figur 6: eine schematische Darstellung eines Ausschnitts einer Herstellungsanlage für ein nicht erfindungsgemäßes Monoextrusionsprofil in der Draufsicht;
- Figur 7: eine schematische Darstellung eines Ausschnitts einer Herstellungsanlage für ein erfindungsgemäßes Koextrusionsprofil in der Seitenansicht;
- Figur 8: eine schematische Darstellung einer V-förmigen Anordnung der Extruder einer Herstellungsanlage eines erfindungsgemäßen Koextrusionsprofils in der Draufsicht; 64/844.362
- Figur 9: eine schematische Darstellung einer L-förmigen Anordnung der Extruder einer Herstellungsanlage eines erfindungsgemäßen Koextrusionsprofils in der Draufsicht; und
- Figur 10: eine schematische Darstellung einer Extrusionsanlage eines erfindungsgemäßen Extrusionsprofils mit zwei Werkzeugen und drei Extrudern in der Draufsicht.

### Beispiele

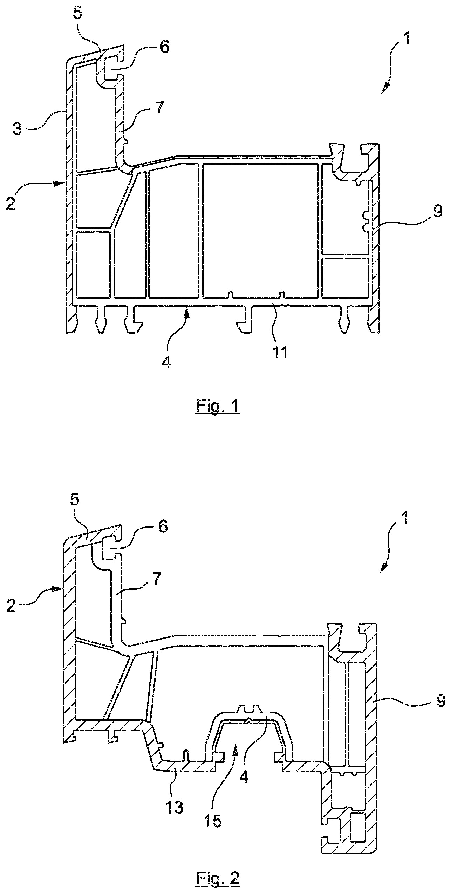

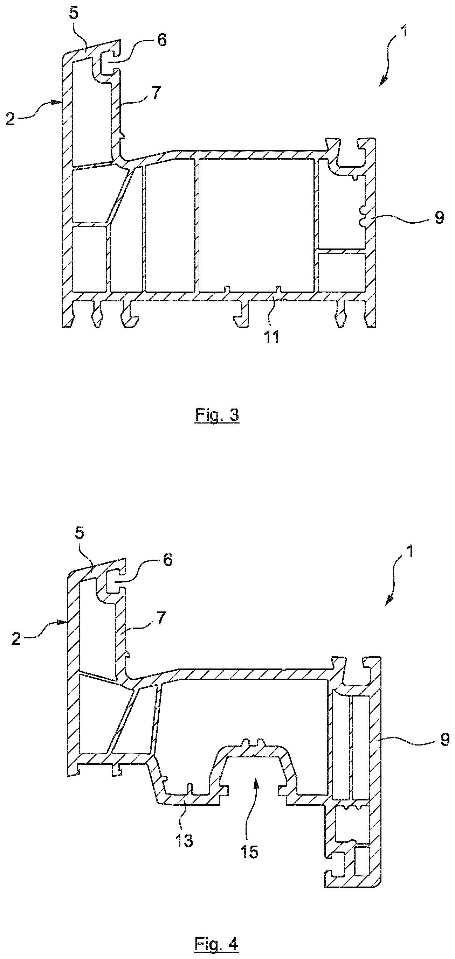

Unter Bezugnahme auf die Figuren 1 bis 4 werden Ausführungsbeispiele eines erfindungsgemäßen Extrusionsprofils, das im Allgemeinen mit der Bezugsziffer 1 versehen ist, beschrieben. In den beispielhaften Ausführungen erfindungsgemäßer Extrusionsprofile 1 der Figuren 1 bis 4 handelt es sich beispielhaft um Extrusionsprofile 1 aus Kunststoff-Recyclingmaterial, insbesondere PVC-Kunststoff-Recyclingmaterial. Die Extrusion erfolgt erfindungsgemäß mittels Koextrusion (Fig. 1 und 2) oder, nicht erfindungsgemäß, mittels Monoextrusion (Fig. 3 und 4).

Figur 1 und Figur 2 zeigen bespielhafte Ausführungen eines erfindungsgemäßen Extrusionsprofils 1 in der Schnittansicht. Die beispielhaften Ausführungen eines erfindungsgemäßen Extrusionsprofils 1 in Figur 1 und Figur 2 sind als Koextrusionsprofil ausgestaltet. In den Figuren 3 und 4 sind beispielhafte nicht erfindungsgemäßer Extrusionsprofile 1 als Mono-Extrusionsprofile abgebildet.

### Beispiel 1: Beispielhafte Ausführungen erfindungsgemäßer Extrusionsprofile im Koextrusionsprofil

Bezugnehmend auf Figur 1 wird ein mittels Koextrusion hergestelltes erfindungsgemäßes Extrusionsprofil 1 beschrieben, das beispielsweise wenigstens einen Horizontal- oder Vertikalholm eines feststehenden Tür- und/oder Fensterrahmenteils bildet. Eine Außenseite des Extrusionsprofils 1 bildende Profiloberfläche ist mit der Bezugsziffer 2 versehen. Diese wenigstens eine, eine Außenseite des Extrusionsprofils 1 bildende Profiloberfläche 2 ist aus zumindest Kunststoff-Recyclingmaterial hergestellt und mit mindestens einer Pigmentierung versehen, welche mindestens ein lichtechtes Pigment umfasst. Auf den Herstellungsprozess des Extrusionsprofils 1 wird später im Detail eingegangen. Die wenigstens eine, eine Außenseite des Extrusionsprofils 1 bildende Profiloberfläche 2 ist in den Figuren 1 und 2 zusätzlich durch eine Schraffierung gekennzeichnet. Die Profiloberfläche 2 umfasst insbesondere diejenigen Profilstege des Extrusionsprofils 1, welche nach außen hin sichtbar sind, insbesondere wenn das Extrusionsprofil 1 in das Tür- und/oder Fensterrahmenteil integriert ist. Zu den relevanten Profilstegen gehören beispielsweise ein der Umgebung und/oder dem Gebäudeäußeren zuzuwendender bzw. zugewandter Profilaußensteg 3, ein zu dem Profilaußensteg 3 geneigter Dichtsteg 5, welcher dazu vorgesehen ist, eine nicht dargestellte Verglasung abzudichten, ein im wesentlichen L-förmiger Verglasungssteg 7 zum Aufnehmen der Verglasung und ein an den Verglasungsstegs 7 anschließender Profilinnensteg 9, der dem Gebäudeinneren zuzuwenden bzw. zugewandt ist. Dadurch ist gewährleistet, dass das Extrusionsprofil 1 die gewünschte Optik, insbesondere eine Recyclinglook-Optik, besitzt. Bei dem Verglasungssteg 7 kann es sich alternativ um einen Stützsteg handeln, wenn das Extrusionsprofil 1 für ein feststehendes Tür- und/oder Fensterrahmenteil eines Schiebesystems oder eines Hebeschiebesystems eingesetzt wird, wobei der Stützsteg 7 dann zum Abstützen bzw. Aufnehmen des relativ zu dem Tür- und/oder Fensterrahmenteil bewegbaren Tür- und/oder Fensterflügelteils dient.

Das Extrusionsprofil 1 umfasst ferner eine mit der Profiloberfläche 2 in einem Herstellungsschritt, mittels Koextrusion, hergestellte Profilbasis 4. Die Profilbasis 4 kann aus einem beliebigen Kunststoff-Recyclingmaterial hergestellt sein, beispielsweise aus einem Kunststoff-Altfenstergranulat, wie einem PVC-Kunststoff-Altfenstergranulat. In Figur 1 ist zu erkennen, dass die Profilbasis 4, außer im Bereich eines die Unterseite des Tür- und/oder Fensterrahmenteils bildenden Bodenstegs 11, von außen nicht sichtbar ist. Die Profilbasis 4 ist, bis auf den Bodensteg 11, vollständig von der Profiloberfläche 2 umschlossen bzw. umrahmt.

Das Extrusionsprofil 1 besitzt in der Schnittansicht in Figur 1 eine im Wesentlichen L-förmige Außenkontur. Die einzelnen Profilstege der Profiloberfläche 2 sind dabei aus einem Stück mittels Extrusion hergestellt und weisen entlang der Extrusionsrichtung (in die Zeichenebene) eine im Wesentlichen konstante Wandstärke und/oder Querschnittsabmessung auf. Im Bereich des Dichtstegs 5 ist eine Dichtungsaufnahme 6 für eine nicht dargestellte Verglasungsdichtung zum Abdichten eines Dichtspalts zwischen der Verglasung und dem Dichtsteg 5 bzw. dem Verglasungssteg 7 vorgesehen.

Im grundsätzlichen Aufbau ist das Extrusionsprofil 1 gemäß Figur 2 analog zu dem Extrusionsprofil 1 gemäß Figur 1 aufgebaut bzw. hergestellt. Im Unterschied zu Figur 1 bildet das Extrusionsprofil 1 gemäß Figur 2 ein bewegbares, insbesondere translatorisch verschiebbares oder verschwenkbares, Tür- und/oder Fensterflügelteil. Auch das Extrusionsprofil 1 für den bewegbaren Tür- und/oder Fensterflügelteil gemäß Figur 2 ist mittels Koextrusion hergestellt und umfasst eine aus zumindest Kunststoff-Recyclingmaterial hergestellte und mit mindestens einer Pigmentierung versehene Profiloberfläche 2 sowie eine aus einem beliebigen Kunststoff-Material hergestellte Profilbasis 4, wobei die Profilbasis 4 und die Profiloberfläche 2 in einem Herstellungsschritt mittels Koextrusion gefertigt werden. Im Unterschied zur Ausführung gemäß Figur 1 ist bei dem Extrusionsprofil 1 des Tür- und/oder Fensterflügelteils in Figur 2 der Verglasungssteg 7 wenigstens teilweise Teil der Profilbasis 4. Ein weiterer Unterschied besteht darin, dass ein einem feststehenden Tür- und/oder Fensterrahmenteil zuzuwendender Beschlagsteg 13, welcher die Unterseite des Extrusionprofils 1 bildet, Teil der Profiloberfläche 2 ist. Die Profiloberfläche 2, wie auch die Profilbasis 4, weisen eine Beschlagnut 15 für einen nicht dargestellten Beschlag des Tür- und/oder Fenstersystems auf.

Der Vorteil der bespielhaften Ausführung eines erfindungsgemäßen Extrusionsprofils gemäß Figur 1 und Figur 2 ist insbesondere, dass zum einen die wenigstens eine, eine Außenseite des Extrusionsprofils bildende Profiloberfläche 2, die aus zumindest Kunststoff-Recyclingmaterial hergestellt ist und mit mindestens einer Pigmentierung versehen ist, bezüglich der die Unterseite des Extrusionsprofils 1 bildende Profilbasis 4 formangepasst ist, sodass eine besonders kompakte Struktur gegeben ist. Des Weiteren kann die wenigstens eine, eine Außenseite des Extrusionsprofils bildende Profiloberfläche 2, so bemessen sein, dass diese im Wesentlichen ausschließlich den sichtbaren Bereich der entsprechenden Profilstege des Extrusionsprofils 1 bildet. Die Profilbasis 4 und die Profiloberfläche 2 können form- und/oder kraftschlüssig miteinander verbunden sein.

Im Vergleich zu Extrusionsprofilen, die im Stand der Technik bekannt sind, kann im erfindungsgemäßen Extrusionsprofil 1 die mindestens eine Pigmentierung auf eine einzige Schicht der wenigstens einen, eine Außenseite des Extrusionsprofils bildenden schraffiert dargestellten Profiloberfläche 2, die aus zumindest Kunststoff-Recyclingmaterial hergestellt ist und mit mindestens einer Pigmentierung versehen ist, begrenzt werden. Diese Schicht umfassend mindestens einer Pigmentierung befindet sich vorzugsweise auf der Sichtfläche des Profils, also an einer dem Gebäudeinnenraum abgewandten Außenseite. Trotz geringer verwendeter Menge der mindestens einen Pigmentierung verleiht die Anbringung einer einzigen, dünnen Schicht der wenigstens einen, eine Außenseite des Extrusionsprofils bildenden schraffiert dargestellten Profiloberfläche 2, dem Kunststoff-Recyclingmaterial-Extrusionsprofil eine besondere Langlebigkeit, Lichtbeständigkeit und Widerstandsfähigkeit gegenüber äußeren Einflüssen, vor allem gegenüber UV-Strahlung.

### Beispiel 2: Beispielhafte Ausführungen nicht erfindungsgemäßer Extrusionsprofile im

### Monoextrusionsprofil

Figur 3 und Figur 4 zeigen weitere bespielhafte Ausführungen eines nicht erfindungsgemäßen Extrusionsprofils in der Schnittansicht, das im Allgemeinen mit der Bezugsziffer 1 versehen ist und in Figur 3 und Figur 4 als Monoextrusionsprofil ausgestaltet ist. Zur Vermeidung von Wiederholungen werden gleiche Komponenten mit der gleichen Begrifflichkeit wie in Figur 1 und 2 versehen.

Im Unterschied zu der bespielhaften Ausführung eines erfindungsgemäßen Extrusionsprofils gemäß Figur 1 und 2, ist bei den in Figur 3 und Figur 4 dargestellten Beispielen des Extrusionsprofils 1 das Extrusionsprofil 1 vollständig aus dem die Profiloberfläche 2 bildenden Kunststoff-Recyclingmaterials, welches mit mindestens einer Pigmentierung versehen ist, hergestellt, nämlich in einem Herstellungsschritt mittels Monoextrusion. Dabei handelt es sich bei der Ausführungsform gemäß Figur 3 analog zu der Ausführungsform gemäß Figur 1 um ein Extrusionsprofil 1 für ein feststehendes Tür- und/oder Fensterrahmenteil und bei der Ausführungsform gemäß Figur 4 analog zu der Ausführungsform gemäß Figur 2 um ein Extrusionsprofil 1 für ein bewegbares Tür- und/oder Fensterflügelteil. Die in Figur 3 und Figur 4 dargestellten Beispiele des nicht erfindungsgemäßen Extrusionsprofils 1 weisen somit nicht nur an der sichtbaren Außenseite des Extrusionprofils 1 eine umweltfreundliche Kunststoff-Recyclingmaterial-Optik, und dennoch eine besondere Lichtbeständigkeit und Widerstandsfähigkeit, vor allem gegenüber UV-Strahlung, sondern auch innenseitig dieselbe umweltfreundliche Kunststoff-Recyclingmaterial-Optik und besondere Lichtbeständigkeit und Widerstandsfähigkeit, vor allem gegenüber UV-Strahlung, aufgrund des Zusatzes der mindestens einen Pigmentierung auf.

Die bespielhafte Ausführung nicht erfindungsgemäßer Extrusionsprofile 1 gemäß Figur 3 und 4 zeigt ein durchgängig schraffiertes Extrusionsprofil 1, da im Monoextrusionsprofil das Kunststoff-Recyclingmaterial, welches mit mindestens einer Pigmentierung versehen ist, durchgängig im einteiligen Extrusionsprofil 1 verwendet wird.

### Beispiel 3: Herstellungsprozess erfindungsgemäßer Extrusionsprofile

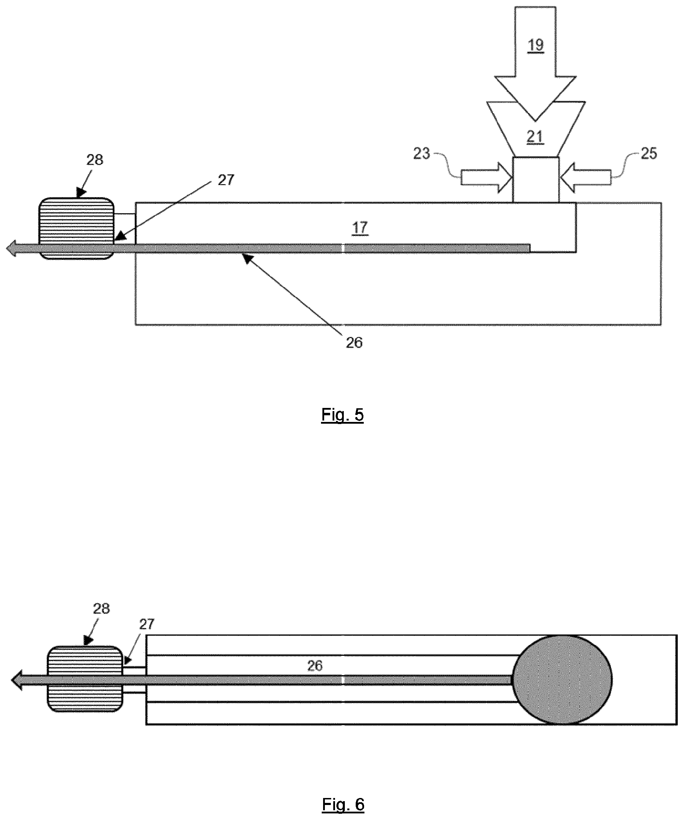

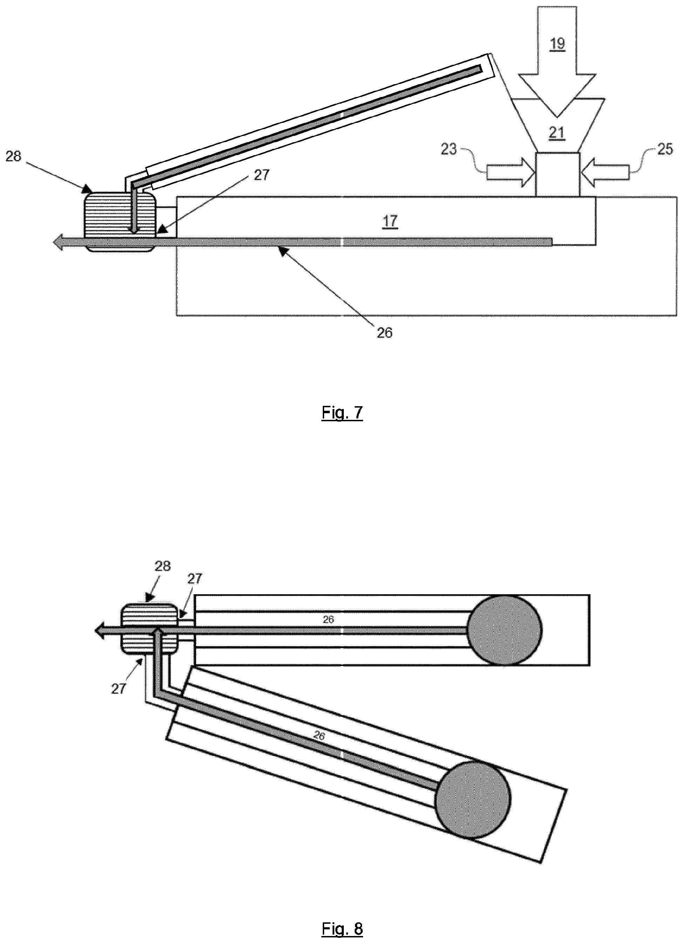

Unter Bezugnahme auf die Figuren 5 bis 10 werden Ausführungsbeispiele des Herstellungsprozesses zum Herstellen eines Extrusionsprofils beschrieben. In den beispielhaften Ausführungen des Herstellungsprozesses in den Figuren 5 bis 10 handelt es sich um Herstellungsverfahren von Extrusionsprofilen aus Kunststoff-Recyclingmaterial, insbesondere PVC-Kunststoff-Recyclingmaterial. Die Extrusion kann mittels Monoextrusion (Fig. 5 und 6) oder mittels Koextrusion (Fig. 7 bis 10) erfolgen.

In Bezug auf Figur 5 ist der Herstellungsprozess zum Herstellen eines nicht erfindungsgemäßen Extrusionsprofils 1 und insbesondere der Herstellungsschritt des Beimischens der mindestens einen Pigmentierung im Extrusionsprozess schematisch dargestellt und wird im Folgenden näher erläutert: Figur 5 zeigt einen Ausschnitt einer Extrusionsanlage 17 zum Herstellen eines nicht erfindungsgemäßen Extrusionsprofils 1 in der Seitenansicht. In einem Einlaufbereich 19, dargestellt mittels des Pfeils 19, wird Kunststoff-Recyclingmaterial, beispielsweise ein Kunststoff-Recyclingmaterial welches ein Alt-Fenster-Granulat ist, zugefördert. Grundsätzlich wird das Kunststoff-Recyclingmaterial weiterverarbeitet, um mindestens eine Pigmentierung zu erhalten. Hierzu wird mittels eines Materialtrichters 21 das Kunststoff-Recyclingmaterial weitergeführt und mit Zusätzen, wie der mindestens einen Pigmentierung, versehen. Durch die Zugabe der mindestens einen Pigmentierung in der Profilextrusion erhält das Kunststoff-Recyclingmaterial die gewünschte Lichtbeständigkeit und Wetterbeständigkeit, vor allem gegenüber UV-Strahlung.

Eine dosierte Zugabe der mindestens einen Pigmentierung zum Kunststoff-Recyclingmaterial erfolgt mittels einer Dosiereinrichtung, welche schematisch durch die Pfeile mit den Bezugszeichen 23, 25 angedeutet ist. Die Dosiereinrichtung 23, 25 kann beispielsweise eine volumetrische und/oder eine gravimetrische Dosiereinrichtung sein.

Durch die dosierte Zugabe der mindestens einen Pigmentierung in der Profilextrusion mittels der Dosiereinrichtung 23, 25 kann die Pigmentierung mit mindestens einem lichtechten Pigment genau gesteuert werden. Darüber hinaus ist ein wesentlicher Vorteil des Herstellungsverfahrens, dass die mindestens eine Pigmentierung auf eine einzige Schicht der wenigstens einen, eine Außenseite des Extrusionsprofils bildenden Profiloberfläche, begrenzt werden kann. Diese Schicht befindet sich vorzugsweise auf der Sichtfläche des Profils, also an einer dem Gebäudeinnenraum abgewandten Außenseite. Trotz geringer Menge der mindestens einen Pigmentierung ermöglicht das erfindungsgemäße Verfahren es, dem Kunststoff-Recyclingmaterial-Extrusionsprofil aufgrund der schichtweisen Anbringung der mindestens einen Pigmentierung eine gewünschte Lichtbeständigkeit und Wetterbeständigkeit, vor allem gegenüber UV-Strahlung, zu verleihen. Hierdurch können die Kosten zur Herstellung eines erfindungsgemäßen Extrusionsprofils reduziert werden, die bei Verwendung einer größeren Menge der mindestens einen Pigmentierung zusätzlich anfallen würden.

Grundsätzlich kann die Zugabe von beispielsweise mindestens einer Pigmentierung zu einem Profil zu einer Reduktion der Festigkeit des Profils führen. Durch das Herstellungsverfahren des Extrusionsprofils 1 wird die Anbringung einer dünnen Schicht der mindestens einen Pigmentierung ermöglicht. Durch die Anbringung einer dünnen Schicht der mindestens einen Pigmentierung, hat die Zugabe der mindestens einen Pigmentierung zu dem Profil keinen merkenswerten festigkeitsreduzierenden Einfluss auf das Profil, da die Zugabe auf eine einzige sehr dünne Schicht reduziert werden kann. Daher weisen die erfindungsgemäß hergestellten Profile eine ausreichende Festigkeit sowohl im Schweißbereich, als auch eine ausreichende Festigkeit gegen Stoß und Bruch, auf.

Figur 6 zeigt eine schematische Darstellung eines Ausschnitts einer Herstellungsanlage für ein nicht erfindungsgemäßes Monoextrusionsprofil in der Draufsicht. Die Fließrichtung der Kunststoffschmelze ist mittels des grauen Pfeils, der mit der Bezugsziffer 26 versehen ist, angedeutet. Der Flansch zur Montage des Werkzeugs (Düse) an den Extruder ist mit der Kennziffer 27 gekennzeichnet. Das Extrusionswerkzeug (Düse), in welchem das Extrusionsprofil geformt wird, ist mit der Kennziffer 28 versehen und mittels einer Schraffierung hervorgehoben. Ein wesentlicher Vorteil des nicht erfindungsgemäßen Herstellungsverfahrens eines Extrusionsprofils besteht darin, dass die mindestens einen Pigmentierung auf eine einzige Schicht der wenigstens einen, eine Außenseite des Extrusionsprofils bildenden Profiloberfläche, begrenzt werden kann. Diese Schicht befindet sich vorzugsweise auf der Sichtfläche des Profils, also an einer dem Gebäudeinnenraum abgewandten Außenseite. Trotz geringer Menge der mindestens einen Pigmentierung ermöglicht das erfindungsgemäße Verfahren es, dem Kunststoff-Extrusionsprofil aufgrund der schichtweisen Anbringung der mindestens einen Pigmentierung dem Kunststoff-Recyclingmaterial eine ausreichende Lichtechtheit zu verleihen. Hierdurch können die Kosten zur Herstellung eines Extrusionsprofils reduziert werden, die bei Verwendung einer größeren Menge der mindestens einen Pigmentierung anfallen würden.

Grundsätzlich kann die Zugabe von Stoffen wie beispielsweise mindestens einer Pigmentierung zu einem Profil zu einer Reduktion der Festigkeit des Profils führen. Durch das nicht erfindungsgemäße Herstellungsverfahren des Extrusionsprofils 1 wird die Anbringung einer dünnen Schicht der mindestens einen Pigmentierung ermöglicht. Durch die Anbringung einer dünnen Schicht der mindestens einen Pigmentierung hat die Zugabe der mindestens einen Pigmentierung zu dem Profil keinen merkenswerten festigkeitsreduzierenden Einfluss auf das Profil, da die Zugabe auf eine einzige sehr dünne Schicht reduziert werden kann. Daher weisen die hergestellten Profile eine ausreichende Festigkeit sowohl im Schweißbereich, als auch eine ausreichende Festigkeit gegen Stoß und Bruch, auf.

In Bezug auf Figur 7 ist der Herstellungsprozess zum Herstellen eines erfindungsgemäßen Extrusionsprofils 1, insbesondere eines Koextrusionsprofils, sowie besonders der Herstellungsschritt des Beimischens der mindestens einen Pigmentierung im Koextrusionsprozess schematisch dargestellt und wird im Folgenden näher erläutert. In Figur 7 werden gleiche Komponenten mit der gleichen Begrifflichkeit wie in den Figuren 1 bis 6 versehen. Figur 7 zeigt einen Ausschnitt einer Extrusionsanlage 17 zum Herstellen eines erfindungsgemäßen Extrusionsprofils 1 in der Seitenansicht. In einem Einlaufbereich 19, dargestellt mittels des Pfeils 19, wird ein Kunststoff-Recyclingmaterial zugefördert. Das Kunststoff-Recyclingmaterial wird dann erfindungsgemäß weiterverarbeitet, um mindestens eine Pigmentierung zu erhalten. Hierzu wird mittels eines Materialtrichters 21 das Kunststoff-Recyclingmaterial als Kunststoffschmelze weitergeführt und durch Koextrusion erfolgt das Zusammenführen des Kunststoff-Recyclingmaterials mit Zusätzen, wie beispielsweise der mindestens einen Pigmentierung. Die beiden Schmelzen werden von zwei separaten Extrusionsanlagen (Extrudern, 17) erzeugt und im Extrusionswerkzeug (Düse, 28) zu einem Extrusionsprofil zusammengeführt.

Grundsätzlich können zwei Extruder beispielsweise in einer V-Anordnung (seitlich versetzt übereinander) oder in einer Huckepackanordnung (direkt übereinander) angeordnet sein. Erfindungsgemäß erfolgt die Anordnung der beiden Extruder zueinander vorzugsweise so, dass über möglichst kurze Wege ein Einfach- oder Doppelstrangwerkzeug oder zwei Doppelstrangwerkzeuge so angeschlossen werden können, dass die beiden Schmelzen im Werkzeug, oder in den Werkzeugen, zu einem oder zwei Profilen geformt werden können.

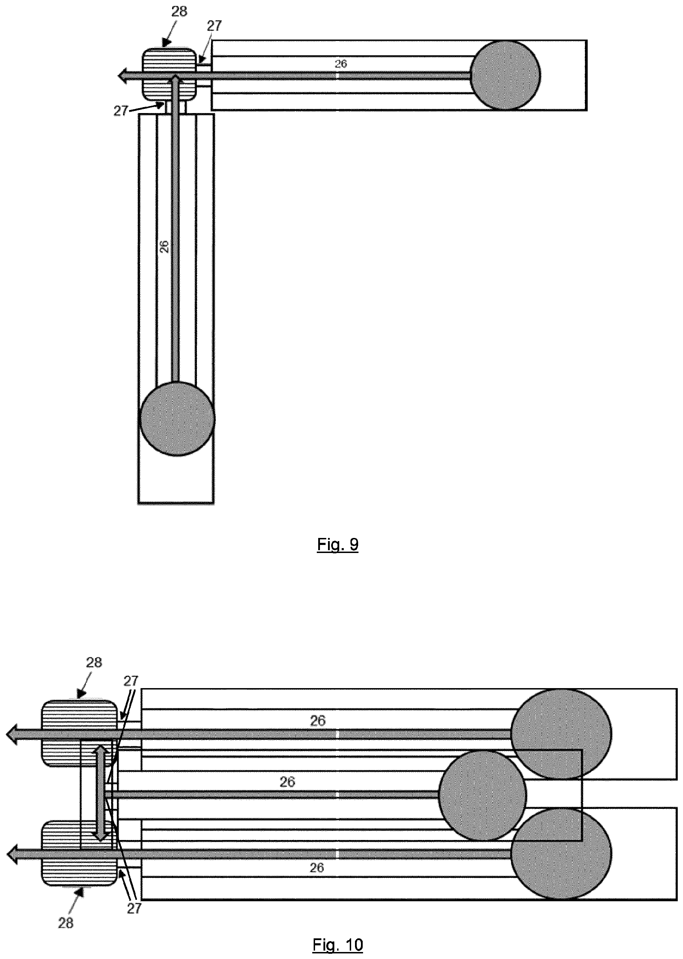

Unter Bezugnahme auf die Figuren 8 bis 10 werden Ausführungsbeispiele eines Herstellungsprozesses zum Herstellen eines erfindungsgemäßen Koxtrusionsprofils beschrieben. In den beispielhaften Ausführungen des Herstellungsprozesses in den Figuren 8 bis 10 handelt es sich um unterschiedliche Anordnungsmöglichkeiten verschiedener Extruder in einer Extrusionsanlage 17. Figur 8 zeigt eine V-förmige Anordnung zweier Extruder in einer Extrusionsanlage 17 für einen Herstellungsprozess zum Herstellen eines erfindungsgemäßen Extrusionsprofils 1 in der Draufsicht. In einer weiteren beispielhaften Ausführung eines Herstellungsprozesses zum Herstellen eines erfindungsgemäßen Koxtrusionsprofils ist die Anordnung zweier Extruder in einer Extrusionsanlage 17 für einen Herstellungsprozess zum Herstellen eines erfindungsgemäßen Extrusionsprofils 1 L-förmig angeordnet, wie in Figur 9 schematisch in der Draufsicht ersichtlich wird. Figur 10 zeigt eine schematische Darstellung einer Extrusionsanlage 17 mit zwei Werkzeugen und drei Extrudern in der Draufsicht.

### Beispiel 4: Ermittlung der Lichtechtheit

Die Lichtechtheit eines Materials kann durch jedes Verfahren bestimmt werden, welches dem Fachmann geläufig ist. Beispielsweise kann die Lichtechtheit nach ISO-Vorschriften bestimmt werden, beispielsweise nach der ISO-Vorschrift Nr. 2135-1984 oder nach der ISO-Vorschrift Nr. 105 B02 durch Trockenbelichten des Materials.

Im Verfahren nach der ISO-Vorschrift Nr. 2135-1984 oder nach der ISO-Vorschrift Nr. 105 B02 wird ein Teil des Materials, insbesondere des Oberflächenmaterials, in beispielsweise einem AtlasWeather-O-meter 65 WRC oder einem AtlasWeather-O-meter Ci 35 A in Belichtungszyklen von beispielsweise je 100 Stunden Normlichtbelichtung mittels einer Xenonbogenlampe belichtet. Erfindungsgemäß kann jedoch jedes andere handelsübliche Belichtungsgerät für die Belichtung des Materials, insbesondere des Oberflächenmaterials, verwendet werden. Darüber hinaus ist die Verwendung einer Xenonbogenlampe nicht zwingend notwendig für die erfindungsgemäße Ermittlung der Lichtecht. Jede andere handelsübliche Lampe kann ebenso erfindungsgemäß verwendet werden. Die Belichtungszyklen von beispielsweise je 100 Stunden Normlichtbelichtung stellen lediglich einen Richtwert da. Dem Fachmann ist es geläufig, eine ideale Anzahl und Aufteilung von Belichtungszyklen, die von 100 Stunden Normlichtbelichtung abweichen können, zu wählen und dieser soll bei der Ermittlung der Lichtecht nicht auf eine einzige Methode beschränkt sein.

Im Verfahren wird ein erster Teil des Materials, insbesondere des Oberflächenmaterials, belichtet, wohingegen ein zweiter Teil des Materials, insbesondere des Oberflächenmaterials, verdeckt und somit nicht belichtet wird. Ein Vergleich des belichteten Materials, insbesondere des Oberflächenmaterials, mit einem Benotungsmuster, welches beispielsweise aus einer Skala aus acht blauen Wollstreifen oder vier grauen Wollstreifen unterschiedlicher Lichtechtheit besteht, ermöglicht dann die Analyse der Lichtechtheit des zu testenden Materials, insbesondere des Oberflächenmaterials. Hierzu wird das Benotungsmuster, welches beispielsweise aus einer Skala aus acht Streifen oder aus vier Streifen unterschiedlicher Lichtechtheit besteht, gemeinsam mit dem zu testenden Material, insbesondere des Oberflächenmaterials, der Belichtung ausgesetzt, wobei das belichtete Material mit dem abgedeckten Materialabschnitt verglichen wird. Die Lichtechtheit wird dann basierend auf den Unterschieden zwischen dem belichteten Materialabschnitt, dem abgedeckten Materialabschnitt und dem belichteten Benotungsmuster bestimmt.

Die Lichtechtheit kann in einer Skala mit 8 Stufen angegeben werden (sogenannter "Blaumaßstab"):
Lichtechtheit 8: hervorragend
Lichtechtheit 7: vorzüglich
Lichtechtheit 6: sehr gut
Lichtechtheit 5: gut
Lichtechtheit 4: ziemlich gut
Lichtechtheit 3: mäßig
Lichtechtheit 2: gering
Lichtechtheit 1: sehr gering

Eine Lichtechtheit von Stufe 7 oder 8 bedeutet, dass kaum bzw. ein gerade erkennbarer Unterschied zwischen dem belichteten Materialabschnitt und dem abgedeckten Materialabschnitt erkennbar ist. Dahingegen ist bei einer Lichtechtheit von Stufe 6 oder kleiner ein deutlicher Unterschied zwischen dem belichteten Materialabschnitt und dem abgedeckten Materialabschnitt erkennbar. Innerhalb der Lichtechtheitsskala verdoppelt sich von einer Stufe zur nächsten in etwa die Zeit, in der das Material dem Licht ausgesetzt werden kann, ohne dass sich das Material verändert. Wird beispielsweise ein Lichtechtheitswert entsprechend der Note 6 gemäß dem Blaumaßstab nach zwei Belichtungszyklen erreicht, so wird das Material als mit einer Lichtechtheitsnote von 7 bewertet. Wird dahingegen ein Lichtechtheitswert entsprechend der Note 6 gemäß dem Blaumaßstab erst nach vier Belichtungszyklen erreicht, so wird das Material als mit einer Lichtechtheitsnote von 8 bewertet.

Die Lichtechtheit der meisten Pigmente ist bei 7 oder höher einzustufen. Die Zugabe der mindestens einen Pigmentierung, welche mindestens ein lichtechtes Pigment umfasst, ermöglicht erfindungsgemäß die Verbesserung der Lichtechtheitsnote der wenigstens einen, eine Außenseite des Extrusionsprofils bildende Profiloberfläche aus zumindest Kunststoff-Recyclingmaterial, auf mindestens eine Lichtechtheitsnote 4, vorzugsweise 5, mehr bevorzugt 6, noch mehr bevorzugt 7 und am meisten bevorzugt die Lichtechtheitsnote 8 des Blaumaßstabs, oder auf eine Lichtechtheitsnote 2, vorzugsweise 3, am meisten bevorzugt die Lichtechtheitsnote 4 des Graumaßstabs.

Bei einer Bewertung der Änderung der Farbe nach dem sogenannten "Graumaßstab" nach DIN EN 20105-A02 erfolgt eine Einteilung der Lichtechtheit in vier Stufen:

| | |
|---|---|
| Lichtechtheit 4: | höchste Lichtbeständigkeit |
| Lichtechtheit 3: | sehr gute Lichtbeständigkeit |
| Lichtechtheit 2: | ausreichende Lichtbeständigkeit |
| Lichtechtheit 1: | geringe Lichtbeständigkeit |

Hierbei entspricht die Lichtechtheitsnote 3 nach dem Graumaßstab in etwa der Lichtechtheitsnote 6 des oben-beschriebenen Blaumaßstabes.

Vorzugsweise wird die Lichtechtheit der Profiloberfläche durch ein Belichtungsverfahren bestimmt, welches von der Einstrahlungsleistung abhängt. Beispielsweise kann die Lichtechtheit der Profiloberfläche durch ein Belichtungsverfahren nach DIN 513: 1999-10 bestimmt werden, in dem die Farbtemperatur beispielsweise bei einer Gesamteinstrahlungsleistung von etwa 12 GJ/m² (S-Klima) im Wellenlängenbereich von 300 nm bis 800 nm gemessen wird, bestimmt werden.

Die Anforderung an erfindungsgemäße Extrusionsprofile ist, dass insbesondere die Stufe 2, besser die Stufe 3, des Graumaßstabs nach DIN EN 20105-A02 nicht unterschritten werden sollte. Ab einem Unterschreiten der Stufe 2, oder der Stufe 3, des Graumaßstabs nach DIN EN 20105-Ao2 kann das Material zur Flecken-, Blasen-, Streifen- und/oder Rissbildung oder anderen nennenswerten Beeinträchtigungen neigen. In einer beispielhaften Ausgestaltung weisen die Profiloberflächen der erfindungsgemäßen Extrusionsprofile eine Lichtechtheit einer maximalen Farbabweichung ΔE von ≤ 3.8 Cielab oder mindestens einer Stufe 2, vorzugsweise einer Stufe 3 eines Graumaßstabs nach DIN EN 20105-A02 auf.

Die Lichtechtheit ist abhängig von regionalen Einflüssen. Während es in Deutschland beispielsweise im Durchschnitt 900 kWh/m² - 1.200 kWh/m² Sonneneinstrahlung im Jahr gibt, so gibt es in Florida etwa 1.800 kWh/m² - 1.900 kWh/m² und in Arizona sogar 2.200 kWh/m² - 2.300 kWh/m² im Jahr. Daher können die Anforderungen an erfindungsgemäße Extrusionsprofile je nach Region des Einsatzes unterschiedlich sein. Eine Lichtechtheit von 7 entspricht in Mitteleuropa in etwa einem Jahr im Freien, ohne dass sich das Material verändert.

### Beispiel 5: Ermittlung der Wetterechtheit und Wetterbeständigkeit

Im Gegensatz zur Lichtechtheit bezeichnet der Begriff "Wetterechtheit" im Sinne dieser Erfindung, die Echtheit eines Materials gegenüber einer Witterung, die beispielsweise UV-Licht, Sauerstoff, Luftverschmutzung und Wasser umfasst.

Derartige Witterungseinflüsse können bei Materialien wie Kunststoffen zu Oxidationsprozessen führen, die nicht nur das visuelle Erscheinungsbild, sondern auch mechanische und physikalische Eigenschaften des Materials, insbesondere des Kunststoffmaterials, beeinflussen können. Beispielsweise kann es zur Rissbildung, Migration, Farbänderung und/oder Änderung der mechanischen Eigenschaften des Materials, insbesondere des Kunststoffmaterials, kommen.

Die Ermittlung der Wetterechtheit und Wetterbeständigkeit kann mittels einer künstlichen Bewitterung, beispielsweise nach folgendem Verfahren (DIN EN 513: 1999-10, Simulation einer heißen Klimazone (S)), erfolgen, bei dem die Außenoberflächen eines Gegenstandes wie folgt bestrahlt werden:
Parameter des Bestrahlungsgerätes

| | |
|---|---|
| Gerätetyp: | XENOTEST^{®} BETA LM |
| Strahlungsquelle: | Xenonbogenstrahlung |
| Filtersystem: | Simulation Sonnenlicht im Freien |
| Schwarzstandardtemperatur: | 65 ± 3 °C |
| Weillstandardtemperatur: | 45 - 50 °C |
| Rel. Luftfeuchtigkeit: | 65 ± 5 % |
| Zyklus: | 6 min Beregnung, 114 min Trockenperiode |
| Bestrahlungsstarke (300 - 400) nm: | 60 ± 2 W/m2 |
| Gesamtbestrahlungsdosisäquivalent im Wellenlangenbereich (300 - 800) nm: | 12 GJ/m2 |
| Bestrahlungszeit: | 6121 h |
| Beginn: | 2014-03-17 |
| Ende: | 2014-12-10 |

Die farbmetrische Beurteilung der Materialien, insbesondere der Oberflächenmaterialien, erfolgt vorzugsweise mit einem Spektralphotometer im Wellenlängenbereich von 360 - 750 nm, bei einer Normlichtart D65, einem Glanzeinschluss und 10° Normalbeobachter. Ermittelt wird der Farbabstand ΔE* gemäß DIN EN ISO 1 1664-4: 2012-06.

### Bezugszeichenliste

- 1: Extrusionsprofil
- 2: Außenseite des Extrusionsprofils bildende Profiloberfläche
- 3: Profilaußensteg
- 4: Profilbasis
- 5: Dichtsteg
- 6: Dichtungsaufnahme
- 7: Verglasungssteg
- 9: Profilinnensteg
- 11: Bodensteg
- 13: Beschlagsteg
- 15: Beschlagnut
- 17: Extrusions-Anlage
- 19: Einlaufbereich
- 21: Materialtrichter
- 23: Dosiereinrichtung
- 25: Dosiereinrichtung
- 26: Fließrichtung der Kunststoffschmelze
- 27: Flansch zur Montage des Werkzeugs (Düse) an den Extruder
- 28: Extrusionswerkzeug (Düse)

## Patentansprüche

1. Extrusionsprofil (1), insbesondere Koextrusionsprofil für ein Fenster- und/oder Türteil, insbesondere ein Fenster- und/oder Türrahmenteil oder ein Fenster- und/oder Türflügelteil, wobei wenigstens eine, eine Außenseite des Extrusionsprofils (1) bildende Profiloberfläche (2) aus zumindest Polyvinylchlorid-Kunststoff-Recyclingmaterial und mindestens einer Pigmentierung hergestellt ist, wobei die Pigmentierung mindestens ein lichtechtes Pigment umfasst, wobei die mindestens einen Pigmentierung auf eine einzige Schicht der wenigstens einen, eine Außenseite des Extrusionsprofils (1) bildende Profiloberfläche (2), begrenzt ist, **dadurch gekennzeichnet, dass** das Extrusionsprofil eine mit der Profiloberfläche (2) in einem Herstellungsschritt mittels Koextrusion hergestellte Profilbasis aus einem Kunststoff-Material umfasst.

2. Extrusionsprofil nach Anspruch 1, wobei die die mindestens eine Pigmentierung umfassende Schicht sich auf einer Sichtfläche des Profils befindet, vorzugsweise an einer von einem Gebäudeinnenraum abgewandten Außenseite.

3. Extrusionsprofil (1) nach einem der vorstehenden Ansprüche, wobei das Kunststoff-Recyclingmaterial ein Gemisch ist, welches ein Alt-Fenster-Granulat umfasst, wobei das Alt-Fenster-Granulat einen Masseanteil zwischen 70 Gew.-% und 100 Gew.-% des Gemisches, insbesondere zwischen 80 Gew.-% und 98 Gew.-% des Gemisches, zwischen 90 Gew.-% und 97 Gew.-% des Gemisches oder etwa 95 Gew.-% des Gemisches, aufweist.

4. Extrusionsprofil nach Anspruch 3, wobei das Alt-Fenster-Granulat aus Kunststoffmaterial besteht, welches im Rahmen des Verarbeitungsprozesses beim Fensterhersteller anfällt.

5. Extrusionsprofil (1) nach einem der vorstehenden Ansprüche, wobei die mindestens eine Pigmentierung mindestens ein organisches und/oder mindestens ein anorganisches Pigment umfasst.

6. Extrusionsprofil (1) nach Anspruch 5, wobei das mindestens eine organische Pigment einen Masseanteil zwischen 0.01 Gew.-% und 10.00 Gew.-% des Gemisches, insbesondere zwischen 0.10 Gew.-% und 5.00 Gew.-% des Gemisches, zwischen 0.50 Gew.-% und 1.00 Gew.-% des Gemisches oder etwa 0.80 Gew.-% des Gemisches, aufweist.

7. Extrusionsprofil (1) nach Anspruch 5 oder 6, wobei das mindestens eine organische Pigment ausgewählt wird aus einem Azopigment, einem Phthalocyaninpigment, einem Quinacridonpigment, einem Lackpigment, und Kohleschwarz.

8. Extrusionsprofil (1) nach einem der Ansprüche 5 bis 7, wobei das mindestens eine anorganische Pigment einen Masseanteil zwischen 10 Gew.-% und 50 Gew.-% des Gemisches, insbesondere zwischen 20 Gew.-% und 40 Gew.-% des Gemisches, zwischen 25 Gew.-% und 35 Gew.-% des Gemisches oder etwa 32 Gew.-% des Gemisches, aufweist.

9. Extrusionsprofil (1) nach einem der Ansprüche 5 bis 8, wobei das mindestens eine anorganische Pigment ausgewählt wird aus einem Eisenoxid, einem Eisenhydroxid, einem Zinkferrit, einem Zinkoxid, einem Magnesiumferrit, einem Manganferrit, einem Cadmiumsulfid, Chrom(III)-oxid, Chrom(III)-oxid-Hydrat, Chromoxidgrün (PG17), Chromoxidhydratgrün (PG18), Kobaltozinkat (CoZnO₂), Malachit (Cu₂CO₃(OH)₂), Kupfer(II)-arsenit (CuHAsO₃), Arsen(III)-sulfid (As₂S₃), Vanadiumgelb (PY184), Bismutvanadat (BiVO₄) und Cadmiumgelb (PY37).

10. Extrusionsprofil (1) nach einem der vorstehenden Ansprüche, wobei das Gemisch zusätzlich mindestens einen Stoff umfasst, welcher ausgewählt wird aus der Gruppe bestehend aus:
(i) einem Mineralfüllstoff, wie beispielsweise Calciumcarbonat, Talk, Glimmer, Wollastonit, Silica, Kaolin, Magnesiumsilikat, Aluminiummagnesiumsilikat, Kaliumaluminiumsilikat, Mica, MicaCelia, Graphit, Schiefer, Glasfaser, oder Dolomit,
(ii) einem Mineralpigment, wie beispielsweise Titan(IV)-oxid (TiO2), Zirconium(II)-oxid (ZnO), Cer(III)-oxid (Ce2O3), Cadmiumsulfid (CdS), Calciumascorbat (CaAs), Zirconium(IV)-oxid (ZrO2), Eisen(I)oxid (Fe2O), Eisen(II)oxid (FeO), Eisen(III)oxid (Fe2O3), oder Siliciumdioxid (Si02),
(iii) einer Polyesterifizierungspolymerverbindung,
(iv) einem Copolymer, wie beispielsweise einem Copolymer des Ethylens mit Vinylacetat (EVA),
(v) einem Gleitmittel, wie beispielsweise Glycerin, einem Fettalkohol, einer Fettsäure, einem Paraffinöl, einem Paraffin, Polyethylen, einem Fettsäureamid oder einem Silikonöl,
(vi) einem Polyvinylchlorid, wie beispielsweise K65-Polyvinylchlorid, K66-Polyvinylchlorid, K67-Polyvinylchlorid, K68-Polyvinylchlorid, oder K69-Polyvinylchlorid; und
(vii) einem Ester, wie beispielsweise Phthalsäureester (Phtalat), Diallylphthalat, Di-2-ethylhexylphthalat, Diisooctylphthalat, oder Tetrabromdioctylphthalat.

11. Extrusionsprofil (1) nach einem der vorstehenden Ansprüche, wobei das Gemisch ein organisches Pigment, ein anorganisches Pigment, und ein Mineralpigment, vorzugsweise Titan(IV)-oxid (TiO2), umfasst, optional wobei das Gemisch zusätzlich einen Mineralfüllstoff, eine Polyesterifizierungspolymerverbindung, ein Polyvinylchlorid, und/oder ein Ester, vorzugsweise Phthalsäureester (Phtalat), umfasst.

12. Extrusionsprofil (1) nach Anspruch 11, wobei das organische Pigment einen Masseanteil zwischen 0.5 Gew.-% und 1.5 Gew.-%, das anorganische Pigment einen Masseanteil zwischen 25.0 Gew.-% und 35.0 Gew.-%, das Mineralpigment, insbesondere Titan(IV)-oxid (TiO2), einen Masseanteil zwischen 20.0 Gew.-% und 30.0 Gew.-%, der Mineralfüllstoff einen Masseanteil zwischen 0.0 Gew.-% und 35.0 Gew.-% Gemisches, die Polyesterifizierungspolymerverbindung einen Masseanteil zwischen 0.0 Gew.-% und 45.0 Gew.-%, das Polyvinylchlorid einen Masseanteil zwischen 0.0 Gew.-% und 35.0 Gew.-%, und der Ester, vorzugsweise Phthalsäureester (Phtalat), einen Masseanteil zwischen 0.0 Gew.-% und 30.0 Gew.-% des Gemisches aufweist.

13. Extrusionsprofil (1) nach einem der vorstehenden Ansprüche, wobei die mindestens eine Pigmentierung, welche mindestens ein lichtechtes Pigment umfasst, eine Lichtechtheit der wenigstens einen, eine Außenseite des Extrusionsprofils (1) bildende Profiloberfläche (2) aus zumindest Kunststoff-Recyclingmaterial, auf mindestens eine Lichtechtheitsnote 4, vorzugsweise 5, mehr bevorzugt 6, noch mehr bevorzugt 7 und am meisten bevorzugt die Lichtechtheitsnote 8 eines Blaumaßstabs, oder auf eine Lichtechtheitsnote 2, vorzugsweise 3, am meisten bevorzugt die Lichtechtheitsnote 4 eines Graumaßstabs erhöht.

14. Verfahren zum Herstellen eines insbesondere nach einem der vorstehenden Ansprüche ausgebildeten Extrusionsprofils (1), bei dem **mittels** Koextrusion, wenigstens eine, eine Außenseite des Extrusionsprofils (1) bildende Profiloberfläche (2) aus zumindest Polyvinylchlorid-Kunststoff-Recyclingmaterial und mindestens einer Pigmentierung hergestellt ist, wobei die Pigmentierung mindestens ein lichtechtes Pigment umfasst, **dadurch gekennzeichnet, dass** die Verwendung der mindestens einen Pigmentierung auf eine einzige Schicht der wenigstens einen, eine Außenseite des Extrusionsprofils (1) bildende Profiloberfläche (2), begrenzt wird wobei das Extrusionsprofil eine mit der Profiloberfläche (2) in einem Herstellungsschritt mittels Koextrusion hergestellte Profilbasis aus einem Kunststoff-Material umfasst.

15. Verfahren nach Anspruch 14, wobei die mindestens eine Pigmentierung, welche mindestens ein lichtechtes Pigment umfasst, eine Lichtechtheit der wenigstens einen, eine Außenseite des Extrusionsprofils (1) bildende Profiloberfläche (2) aus zumindest Kunststoff-Recyclingmaterial, auf mindestens eine Lichtechtheitsnote 4, vorzugsweise 5, mehr bevorzugt 6, noch mehr bevorzugt 7 und am meisten bevorzugt die Lichtechtheitsnote 8 eines Blaumaßstabs, oder auf eine Lichtechtheitsnote 2, vorzugsweise 3, am meisten bevorzugt die Lichtechtheitsnote 4 eines Graumaßstabs erhöht.

16. Verfahren nach Anspruch 15, wobei die Lichtechtheit der wenigstens einen, eine Außenseite des Extrusionsprofils (1) bildende Profiloberfläche (2), durch ein Verfahren bestimmt wird, umfassend die folgende Schritte:
(i) Belichten eines Benotungsmusters und eines ersten Teils der Profiloberfläche (2), wobei ein zweiter Teil der Profiloberfläche (2) abgedeckt wird,
(ii) Vergleichen des ersten Teils der Profiloberfläche (2) mit dem zweiten Teil der Profiloberfläche (2) und dem Benotungsmuster, und
(iii) Bestimmen einer Lichtechtheitsnote.

## Claims

1. Extrusion profile (1), in particular coextrusion profile, for a window and/or door part, in particular a window and/or door frame part or a window and/or door leaf part, wherein at least one profile surface (2) forming an outer side of the extrusion profile (1) is produced from at least polyvinyl chloride plastic recycling material and at least one pigmentation, wherein the pigmentation comprises at least one light-fast pigment, wherein the at least one pigmentation is limited to a single layer of the at least one profile surface (2) forming an outer side of the extrusion profile (1), **characterized in that** the extrusion profile comprises a profile base produced with the profile surface (2) in a production step by means of coextrusion from a plastic material.

2. Extrusion profile according to Claim 1, wherein the layer comprising the at least one pigmentation is located on a visible surface of the profile, preferably on an outer side facing away from a building interior.

3. Extrusion profile (1) according to any one of the preceding claims, wherein the plastic recycling material is a mixture which comprises old window granules, wherein the old window granules have a mass fraction of between 70% by weight and 100% by weight of the mixture, in particular between 80% by weight and 98% by weight of the mixture, between 90% by weight and 97% by weight of the mixture or approximately 95% by weight of the mixture.

4. Extrusion profile according to Claim 3, wherein the old window granules consist of plastic material which is obtained during the processing process at the window manufacturer.

5. Extrusion profile (1) according to any one of the preceding claims, wherein the at least one pigmentation comprises at least one organic and/or at least one inorganic pigment.

6. Extrusion profile (1) according to Claim 5, wherein the at least one organic pigment has a mass fraction of between 0.01% by weight and 10.00% by weight of the mixture, in particular between 0.10% by weight and 5.00% by weight of the mixture, between 0.50% by weight and 1.00% by weight of the mixture or approximately 0.80% by weight of the mixture.

7. Extrusion profile (1) according to Claim 5 or 6, wherein the at least one organic pigment is selected from an azo pigment, a phthalocyanine pigment, a quinacridone pigment, a lacquer pigment and carbon black.

8. Extrusion profile (1) according to any one of Claims 5 to 7, wherein the at least one inorganic pigment has a mass fraction of between 10% by weight and 50% by weight of the mixture, in particular between 20% by weight and 40% by weight of the mixture, between 25% by weight and 35% by weight of the mixture or approximately 32% by weight of the mixture.

9. Extrusion profile (1) according to any one of Claims 5 to 8, wherein the at least one inorganic pigment is selected from an iron oxide, an iron hydroxide, a zinc ferrite, a zinc oxide, a magnesium ferrite, a manganese ferrite, a cadmium sulphide, chromium(lll) oxide, chromium(III) oxide hydrate, chromium oxide green (PG17), chromium oxide hydrate green (PG18), cobaltozincate (CoZnO₂), malachite (Cu₂CO₃(OH)₂), copper(II) arsenite (CuHAsO₃), arsenic(III) sulphide (As₂S₃), vanadium yellow (PY184), bismuth vanadate (BiVO₄) and cadmium yellow (PY37).

10. Extrusion profile (1) according to any one of the preceding claims, wherein the mixture additionally comprises at least one substance which is selected from the group consisting of:
(i) a mineral filler, such as, for example, calcium carbonate, talc, glimmer, wollastonite, silica, kaolin, magnesium silicate, aluminium magnesium silicate, potassium aluminium silicate, mica, mica celia, graphite, shale, glass fibre, or dolomite,
(ii) a mineral pigment, such as, for example, titanium(IV) oxide (TiO2), zirconium(II) oxide (ZnO), cerium(III) oxide (Ce203), cadmium sulphide (CdS), calcium ascorbate (CaAs), zirconium(IV) oxide (ZrO2), iron(I) oxide (Fe20), iron(II) oxide (FeO), iron(III) oxide (Fe203), or silicon dioxide (SiO2),
(iii) a polyesterifying polymer compound,
(iv) a copolymer, such as, for example, a copolymer of ethylene with vinyl acetate (EVA),
(v) a lubricant, such as, for example, glycerol, a fatty alcohol, a fatty acid, a paraffin oil, a paraffin, polyethylene, a fatty acid amide or a silicone oil,
(vi) a polyvinyl chloride, such as, for example, K65 polyvinyl chloride, K66 polyvinyl chloride, K67 polyvinyl chloride, K68 polyvinyl chloride, or K69 polyvinyl chloride; and
(vii) an ester, such as, for example, phthalic acid ester (phthalate), diallyl phthalate, di-2-ethylhexyl phthalate, diisooctyl phthalate, or tetrabromodioctyl phthalate.

11. Extrusion profile (1) according to any one of the preceding claims, wherein the mixture comprises an organic pigment, an inorganic pigment, and a mineral pigment, preferably titanium(IV) oxide (TiO2), optionally wherein the mixture additionally comprises a mineral filler, a polyesterifying polymer compound, a polyvinyl chloride, and/or an ester, preferably phthalic acid ester (phthalate).

12. Extrusion profile (1) according to Claim 11, wherein the organic pigment has a mass fraction of between 0.5% by weight and 1.5% by weight, the inorganic pigment has a mass fraction of between 25.0% by weight and 35.0% by weight, the mineral pigment, in particular titanium(IV) oxide (TiO2), has a mass fraction of between 20.0% by weight and 30.0% by weight, the mineral filler has a mass fraction of between 0.0% by weight and 35.0% by weight of the mixture, the polyesterifying polymer compound has a mass fraction of between 0.0% by weight and 45.0% by weight, the polyvinyl chloride has a mass fraction of between 0.0% by weight and 35.0% by weight, and the ester, preferably phthalic acid ester (phthalate), has a mass fraction of between 0.0% by weight and 30.0% by weight of the mixture.

13. Extrusion profile (1) according to any one of the preceding claims, wherein the at least one pigmentation, which comprises at least one light-fast pigment, increases a light-fastness of the at least one profile surface (2) forming an outer side of the extrusion profile (1) from at least plastic recycling material to at least one light-fastness grade 4, preferably 5, more preferably 6, even more preferably 7 and most preferably the light-fastness grade 8 of a blue scale, or to a light-fastness grade 2, preferably 3, most preferably the light-fastness grade 4 of a gray scale.

14. Method for producing an extrusion profile (1) formed in particular according to any one of the preceding claims, in which at least one profile surface (2) forming an outer side of the extrusion profile (1) is produced by means of coextrusion from at least polyvinyl chloride plastic recycling material and at least one pigmentation, wherein the pigmentation comprises at least one light-fast pigment, **characterized in that** the use of the at least one pigmentation is limited to a single layer of the at least one profile surface (2) forming an outer side of the extrusion profile (1), wherein the extrusion profile comprises a profile base produced with the profile surface (2) in a production step by means of coextrusion from a plastic material.

15. Method according to Claim 14, wherein the at least one pigmentation, which comprises at least one light-fast pigment, increases a light-fastness of the at least one profile surface (2) forming an outer side of the extrusion profile (1) from at least plastic recycling material to at least one light-fastness grade 4, preferably 5, more preferably 6, even more preferably 7 and most preferably the light-fastness grade 8 of a blue scale, or to a light-fastness grade 2, preferably 3, most preferably the light-fastness grade 4 of a gray scale.

16. Method according to Claim 15, wherein the light-fastness of the at least one profile surface (2) forming an outer side of the extrusion profile (1) is determined by a method comprising the following steps:
(i) exposing a grading pattern and a first part of the profile surface (2), wherein a second part of the profile surface (2) is covered,
(ii) comparing the first part of the profile surface (2) with the second part of the profile surface (2) and the grading pattern, and
(iii) determining a light-fastness grade.

## Revendications

1. Profilé extrudé (1), notamment profilé coextrudé destiné à une partie de fenêtre et / ou de porte, notamment à une partie de cadre de porte et / ou de fenêtre ou à une partie de vantail de porte et / ou de fenêtre, au moins une surface (2) de profilé constituant une face extérieure du profilé extrudé (1) étant fabriquée à partir d'au moins une matière plastique de polychlorure de vinyle recyclée et d'au moins une pigmentation, la pigmentation comprenant au moins un pigment stable à la lumière, l'au moins une pigmentation étant limitée à une seule couche de l'au moins une surface (2) de profilé constituant une face extérieure du profilé extrudé (1),
**caractérisé en ce que**
le profilé extrudé comprend une base de profilé en une matière plastique, fabriquée au moyen d'une coextrusion en une étape de fabrication avec la surface (2) de profilé.

2. Profilé extrudé selon la revendication 1, la couche comprenant l'au moins une pigmentation se trouvant sur une surface apparente du profilé, de préférence sur une face extérieure opposée à un espace intérieur de bâtiment.

3. Profilé extrudé (1) selon l'une quelconque des revendications précédentes, la matière plastique recyclée étant un mélange, lequel comprend des granulés de vieilles fenêtres, les granulés de vieilles fenêtres présentant une fraction massique comprise entre 70 % en poids et 100 % en poids du mélange, notamment comprise entre 80 % en poids et 98 % en poids du mélange, comprise entre 90 % en poids et 97 % en poids du mélange d'environ 95 % en poids du mélange.

4. Profilé extrudé selon la revendication 3, les granulés de vieilles fenêtres étant constitués d'une matière plastique produite dans le cadre du processus de mise en œuvre chez le fabricant de fenêtres.

5. Profilé extrudé (1) selon l'une quelconque des revendications précédentes, l'au moins une pigmentation comprenant au moins un pigment organique et / ou inorganique.

6. Profilé extrudé (1) selon la revendication 5, l'au moins un pigment organique présentant une fraction massique comprise entre 0.01 % en poids et 10.00 % en poids du mélange, notamment comprise entre 0.10 % en poids et 5.00 % en poids du mélange, comprise entre 0.50 % en poids et 1.00 % en poids du mélange ou d'environ 0.80 % en poids du mélange.

7. Profilé extrudé (1) selon la revendication 5 ou 6, l'au moins un pigment organique étant sélectionné parmi un pigment azoïque, un pigment de phtalocyanine, un pigment de quinacridone, un pigment de laque et du noir de carbone.

8. Profilé extrudé (1) selon l'une quelconque des revendications 5 à 7, l'au moins un pigment inorganique présentant un fraction massique comprise entre 10 % en poids et 50 % en poids du mélange, notamment comprise entre 20 % en poids et 40 % en poids du mélange, comprise entre 25 % en poids et 35 % en poids du mélange ou d'environ 32 % en poids du mélange.

9. Profilé extrudé (1) selon l'une quelconque des revendications 5 à 8, l'au moins un pigment inorganique étant sélectionné parmi un oxyde de fer, un hydroxyde de fer, une ferrite de zinc, un oxyde de zinc, une ferrite de magnésium, une ferrite de manganèse, un sulfure de cadmium, un oxyde de chrome(III), un hydrate d'oxyde de chrome(III), un vert d'oxyde de chrome (PG17), un vert d'hydrate d'oxyde de chrome (PG18), un zincate de cobalt (CoZnO₂), de la malachite (Cu₂CO₃(OH)₂), de l'arsénite de cuivre(II) (CuHAsO₃), un sulfure d'arsenic (III) (As₂S₃), un jaune de vanadium (PY184), un vanadate de bismuth (BiVO₄) et un jaune de cadmium (PY37).

10. Profilé extrudé (1) selon l'une quelconque des revendications précédentes, le mélange comprenant additionnellement au moins une substance, laquelle est sélectionnée dans le groupe composé :
(i) d'un agent de charge minéral, comme par exemple un carbonate de calcium, du talc, du mica, de la wollastonite, de la silice, du kaolin, un silicate de magnésium, un silicate d'aluminium et de magnésium, un silicate de potassium et d'aluminium, un mica, un mica de muscovite, du graphite, de l'ardoise, des fibres de verre ou de la dolomite,
(ii) d'un pigment minéral, comme par exemple un oxyde de titane (IV) (TiO₂), un oxyde de zirconium(II) (ZnO), un oxyde de cérium(III) (Ce₂O₃), un sulfure de cadmium (CdS), un ascorbate de calcium (CaAs), un oxyde de zirconium(IV) (ZrO₂), un oxyde de fer(I) (Fe₂O), un oxyde de fer(II) (FeO), un oxyde de fer (III) (Fe2O3), ou un dioxyde de silicium (SiO₂),
(iii)d'un composé polymère de polyestérification,
(iv) d'un copolymère, comme par exemple un copolymère de l'éthylène avec de l'acétate de vinyle (EVA),
(v) d'un lubrifiant, comme par exemple de la glycérine, un alcool gras, un acide gras, une huile de paraffine, une paraffine, du polyéthylène, un amide d'acide gras ou une huile de silicone,
(vi) d'un polychlorure de vinyle, comme par exemple le polychlorure de vinyle K65, le polychlorure de vinyle K66, le polychlorure de vinyle K67, le polychlorure de vinyle K68 ou le polychlorure de vinyle K69 ; et
(vii) d'un ester, comme par exemple l'ester d'acide phtalique (phtalate), le phtalate de diallyle, le di(2-éthylhexyle)phtalate, le phtalate de diisooctyle, ou le phtalate de tetrabromodioctyle.

11. Profilé extrudé (1) selon l'une quelconque des revendications précédentes, le mélange comprenant un pigment organique, un pigment inorganique et un pigment minéral, de préférence un oxyde de titane(IV) (TiO₂), le mélange comprenant additionnellement en option un agent de charge minéral, un composé polymère de polyestérification, un polychlorure de vinyle, et / ou un ester, de préférence un ester phtalique (phtalate).

12. Profilé extrudé (1) selon la revendication 11, le pigment organique présentant une fraction massique comprise entre 0.5 % en poids et 1.5 % en poids, le pigment inorganique présentant une fraction massique comprise entre 25.0 % en poids et 35.0 % en poids, le pigment minéral, notamment l'oxyde de titane(IV) (TiO₂) présentant une fraction massique comprise entre 20.0 % en poids et 30.0 % en poids, l'agent de charge minéral présentant une fraction massique comprise entre 0.0 % en poids et 35.0 % en poids du mélange, le composé polymère de polyestérification présentant une fraction massique comprise entre 0.0 % en poids et 45.0 % en poids, le polychlorure de vinyle présentant une fraction massique comprise entre 0.0 % en poids et 35.0 % en poids et l'ester, de préférence l'ester phtalique (phtalate) présentant une fraction massique comprise entre 0.0 % en poids et 30.0 % en poids du mélange.

13. Profilé extrudé (1) selon l'une quelconque des revendications précédentes, l'au moins une pigmentation, laquelle comprend au moins un pigment stable à la lumière augmentant la stabilité à la lumière de l'au moins une surface (2) de profilé constituant une face extérieure du profilé extrudé (1) en au moins de la matière plastique recyclée à au moins une note de stabilité à la lumière de 4, de préférence de 5, de manière plus préférentielle de 6, de manière encore plus préférentielle de 7 et de manière la plus préférentielle à la note de stabilité à la lumière de 8 d'une échelle de bleus ou à une note de stabilité à la lumière de 2, de préférence de 3, de manière la plus préférentielle, à la note de stabilité à la lumière de 4 d'une échelle de gris.

14. Procédé, destiné à fabriquer un profilé extrudé (1) conçu notamment selon l'une quelconque des revendications précédentes, lors duquel, au moyen d'une coextrusion, une surface (2) de profilé constituant une face extérieure du profilé extrudé (1) est fabriquée à partir d'au moins une matière plastique de polychlorure de vinyle recyclée et d'au moins une pigmentation, la pigmentation comprenant au moins un pigment stable à la lumière, **caractérisé en ce que** l'on limite l'utilisation de l'au moins une pigmentation à une seule couche de l'au moins une surface (2) de profilé constituant une face extérieure du profilé extrudé (1), le profilé extrudé comprenant comprend une base de profilé en une matière plastique, fabriquée au moyen d'une coextrusion en une étape de fabrication avec la surface (2) de profilé.

15. Procédé selon la revendication 14, l'au moins une pigmentation, laquelle comprend au moins un pigment stable à la lumière augmentant une stabilité à la lumière de l'au moins une surface (2) de profilé constituant une face extérieure du profilé extrudé (1) en au moins de la matière plastique recyclée à au moins une note de stabilité à la lumière de 4, de préférence de 5, de manière plus préférentielle, de 6, de manière encore plus préférentielle, de 7 et de la manière la plus préférentielle, à la note de stabilité à la lumière de 8 d'une échelle de bleus ou à une note de stabilité à la lumière de 2, de préférence de 3, de manière la plus préférentielle, à la note de stabilité à la lumière de 4 d'une échelle de gris.

16. Procédé selon la revendication 15, la stabilité à la lumière de l'au moins une surface (2) de profilé constituant une face extérieure du profilé extrudé (1) étant déterminée par un procédé comprenant les étapes suivantes, consistant à :
(i) exposer à la lumière un échantillon de notation et une première partie de la surface (2) de profilé, alors que l'on couvre une deuxième partie de la surface (2) de profilé,
(ii) comparer la première partie de la surface (2) de profilé avec la deuxième partie de la surface (2) de profilé et l'échantillon de notation, et
(iii) déterminer une note de stabilité à la lumière.
